# FASCICULE DE BREVET EUROPEEN

(11) **EP 4 478 143 B1**
(45) Date de publication et mention de la délivrance du brevet: **04.11.2026**
(21) Numéro de dépôt: 23305938.5
(22) Date de dépôt: 13.06.2023
(51) Int. Cl.: G05B 23/02

(54) **PROCEDE DE CONSTRUCTION D'UN ARBRE DE DECISION POUR LE DIAGNOSTIC D'UN SYSTEME, PROCEDE DE DIAGNOSTIC DU SYSTEME, DISPOSITIFS ET PROGRAMMES D'ORDINATEUR CORRESPONDANTS**
VERFAHREN ZUR KONSTRUKTION EINER ENTSCHEIDUNGSBAUMS ZUR SYSTEMDIAGNOSE, VERFAHREN ZUR SYSTEMDIAGNOSE, VORRICHTUNGEN UND COMPUTERPROGRAMME DAFÜR
METHOD FOR CONSTRUCTING A DECISION TREE FOR DIAGNOSING A SYSTEM, METHOD FOR DIAGNOSING THE SYSTEM, CORRESPONDING DEVICES AND COMPUTER PROGRAMS

(43) Date de publication de la demande: 18.12.2024
(73) Titulaire: ATOS FRANCE, 95870 Bezons (FR); Centre National de la Recherche Scientifique, 75016 Paris (FR); Institut National des Sciences Appliquées de Toulouse, 31400 Toulouse (FR)
(72) Inventeur: GOUPIL, Louis, 31300 Toulouse (FR); TRAVÉ-MASSUYÈS, Louise, 31460 Caraman (FR); CHANTHERY, Élodie, 31400 Toulouse (FR)
(74) Mandataire: Novagraaf Technologies

(56) Documents cités:
- WO-A1-2012/163985

## Description

### Domaine technique de l'invention

L'invention concerne le diagnostic d'un systèmes industriel complexe dont on ne connait pas les équations mathématiques régissant son fonctionnement.

### Etat de la technique

Diagnostiquer un système industriel complexe nécessite de détecter les différents types de panne (ou fautes) qui peuvent se produire et de les isoler, c'est-à-dire de déterminer quel(s) composants ou sous-systèmes en sont à l'origine.

Pour réaliser le diagnostic d'un système industriel complexe décrit par de nombreuses équations qui peuvent être linéaires ou non linéaires, il existe une méthode dite d'analyse structurelle, qui réalise une abstraction de ces équations en ne gardant que les liens entre leurs variables. Les variables en question sont des variables observables du système à diagnostiquer, pour lesquelles des valeurs de mesure sont acquises par des capteurs. L'analyse structurelle exploite une redondance entre ces variables pour déterminer des relations de redondance analytique dites ARR (de l'anglais, « Analytical Redundancy Relations ») qui lui permettent de construire des indicateurs de panne. Chaque ARR est associée à un état de panne donné, elle n'est pas vérifiée quand le système est dans l'état de panne donnée et elle est vérifiée quand le système fonctionne normalement

Selon les principes de l'approche d'analyse structurelle, par exemple décrits dans l'article de Goupil et al., intitulé « A survey on diagnosis methods combining dynamic systems, structural analysis and machine learning », publié dans la conférence DX2022, HAL ID :hal-03773707, en 2022, on construit un modèle structurel du système, généralement sous forme de graphe, comprenant des sous-graphes qui ont certaines propriétés et représentent des parties du système. À chaque partie du système est associée une ARR qui lie les variables observables présentes dans cette partie du système.

Plus précisément, l'analyse structurelle cherche à construire des sous-systèmes d'équations structurellement redondants, c'est- à -dire que des résidus peuvent être générés à partir des équations de chacun de ces sous-systèmes. Idéalement, l'objectif est d'obtenir des sous-systèmes dont la redondance est minimale, dits MSO (de l'anglais, « Minimally Structurally Overdetermined »), c'est-à-dire qu'ils ont exactement une équation de plus que le nombre de variables inconnues. Cela signifie que des résidus peuvent être générés en utilisant les équations de ce sous-système. A cet égard, des méthodes existent pour déterminer l'expression analytique d'un générateur de résidus. A titre d'exemple, on cite l'article de Travé-Massuyès et al., intitulé « Diagnosability analysis based on component supported analytical redundancy relations », publié dans la revue « IEEE Transactions on System, Man, and Cybernetics - Part A : Systems and Humans », 36(6) :1146-1160, en 2006. Dans le cadre d'une application au diagnostic, seules les parties du sous-système impactées par au moins un type de panne du système sont pris en considération et un tel générateur de résidus peut être ensuite utilisé pour diagnostiquer les pannes ou fautes dans un support des pannes ou fautes qui impactent la partie du sous-système, c'est-à-dire auquel il est sensible.

Un inconvénient de cette méthode d'analyse structurelle appliquée au diagnostic d'un système industriel complexe est qu'elle exige une connaissance profonde du système, c'est-à-dire des équations mathématiques régissant le fonctionnement du système. Or, il arrive souvent qu'on ne les connaisse pas, sans compter qu'aujourd'hui, la tendance est à la complexification des systèmes industriels, ce qui fait que les systèmes d'équations qui les régissent deviennent eux-mêmes plus complexes, et qu'il devient donc de plus en plus difficile de leur appliquer cette méthode d'analyse structurelle.

Des approches combinant apprentissage machine (de l'anglais, « machine learning ») à la méthode d'analyse structurelle, ont été proposées, notamment pour l'identification de l'expression d'une ARR par apprentissage automatique. A cet égard, on cite par exemple l'article de Jung et al., intitulé « Automatic design of grey-box recurrent neural networks for fault diagnosis using structural models and causal information », publié dans les Proceedings de la conférence « Conference on Learnings for Dynamics and Control » , en 2022. Cette méthode permet d'améliorer les performances de diagnostic des pannes du système.

Un autre méthode d'analyse basée sur un arbre de décision est donné par le document WO2012/163985 A1.

Il reste néanmoins nécessaire de connaître les variables qui interviennent dans les équations mathématiques du système, ce qui rend la méthode inexploitable pour de nombreux systèmes industriels. La présente invention vient améliorer la situation.

L'invention a donc notamment pour but de remédier à tout ou partie des inconvénients précités.

### Présentation de l'invention

Elle propose notamment à cet effet un procédé de construction d'un arbre de décision pour le diagnostic d'un système comprenant une pluralité de composants, ledit procédé comprenant :
- l'obtention d'un jeu de données d'entraînement comprenant des paires, unedite paire comprenant un vecteur de valeurs mesurées de variables observables représentatives d'un fonctionnement du système et une étiquette associée, l'étiquette appartenant à un groupe d'étiquettes comprenant une étiquette représentative d'un état de fonctionnement nominal dudit système et des étiquettes représentatives chacune d'un état de panne dudit système, chaque état de panne étant associé à au moins un composant dudit système,
- le traitement d'un nœud courant de l'arbre de décision associé à un sous-ensemble du jeu de données d'entraînement, dit jeu de données courant, issu du jeu de données d'entraînement, ledit traitement comprenant, lorsqu'au moins un critère de division est satisfait, la division du nœud courant en un premier et un deuxième nœuds fils par application d'une fonction de classification obtenue à partir du jeu de données courant et définie pour associer à plusieurs desdites variables observables, une première classe, dite classe nominale, représentative de l'état de fonctionnement nominal du système ou une deuxième classe, dite classe de panne, représentative desdits états de panne dudit système, et classer les paires du sous-jeu de données courant comprenant une première étiquette du groupe d'étiquettes dans la classe nominale et les paires du sous-jeu de données comprenant une deuxième étiquette du groupe d'étiquettes dans la classe de panne, et la propagation desdites paires classées dans la classe nominale dans un premier sous-jeu de données du premier nœud fils et desdites paires classées dans la classe de panne dans un deuxième sous-jeu de données du deuxième nœud fils, et
- la mise à disposition de l'arbre de décision pour le diagnostic du système.

L'invention propose ainsi de construire un arbre de décision réalisant un diagnostic d'un système comprenant plusieurs composants, par classification symbolique, en s'appuyant sur les principes de l'analyse structurelle, mais sans qu'il soit nécessaire de connaitre les variables régissant les équations du système à diagnostiquer. La construction de l'arbre de décision comprend la création initiale d'un nœud racine que l'on divise en deux nœuds fils et vers chacun desquels on propage l'une ou l'autre de deux parties distinctes du jeu de données associé au nœud racine. Cette division se fait au niveau du nœud racine, puis au niveau des nœuds fils à l'aide d'une fonction de classification spécifiquement définie et ajustée pour chacun d'entre eux, de façon à discriminer, dans la partie du jeu de données d'entraînement qui leur est associée, les paires comprenant des étiquettes représentatives de deux états distincts de fonctionnement du système à diagnostiquer. Les paires ainsi séparées sont propagées dans l'une ou l'autre des branches conduisant vers l'un ou l'autre des deux nœuds fils du nœud courant. Le processus est répété pour chacun des nœuds fils tant qu'un critère de division est satisfait.

Chaque nœud étant dédié à la discrimination entre deux étiquettes données sur la base d'un jeu de données obtenu par division du jeu de données d'entraînement d'un nœud père, la discrimination s'affine au fur et à mesure qu'on descend dans l'arbre de décision.

L'arbre de décision ainsi construit est un arbre de décision multivarié puisqu'il utilise au niveau d'un nœud donné plusieurs des variables observables disponibles en entrée.

Avec l'invention, les fonctions de classification qui opèrent au niveau de chaque nœud sont obtenues à partir de la pluralité de variables observables disponibles en entrée et du sous-jeu de données du jeu de données d'entraînement associé au nœud courant.

Les nœuds non divisés ou feuilles de l'arbre de décision ainsi construit sont associés à un état de fonctionnement du système (nominal ou panne d'un composant) et permettent donc chacun d'isoler un état de panne des différents composants du système.

L'invention s'applique à tout type de système industriel statique comprenant m composants, avec m entier supérieur à 2, chacun pouvant donner lieu à un type de panne ou de faute, c'est-à-dire qu'elle traite des variables observables représentatives d'un fonctionnement de ce système, qui sont statiques. Autrement dit, elle ne traite pas de variable dynamique (dont la dérivée est non nulle).

Selon un aspect de l'invention, ledit critère de division comprend un critère d'impureté et ledit procédé comprend la vérification du critère d'impureté, comprenant la détermination d'un ratio entre un nombre de paires du jeu de données courant associé à une étiquette donnée du groupe d'étiquettes et un nombre total de paires dudit jeu de données courant, le critère d'impureté étant vérifié lorsque le ratio est inférieur à un seuil de pureté donné.

Autrement dit, tant qu'au moins deux états de fonctionnement distincts du système sont représentés dans le jeu de données courant associé au nœud courant (il est impur), on essaie de diviser le nœud. Si au contraire, on vérifie qu'un seul état de fonctionnement est représenté dans le jeu de données courant (le nœud courant est pur), le traitement s'arrête et le nœud courant ne sera pas *divisé. Il s'agit d'un nœud feuille qui termine une branche donnée de l'arbre de décision.*

Selon un autre aspect de l'invention, le traitement du nœud courant comprend, lorsque le critère d'impureté est satisfait :
- la sélection de la première et de la deuxième étiquettes du groupe d'étiquettes, dite paire d'étiquettes, les première et deuxième étiquettes étant distinctes et représentées dans les paires du jeu de données courant,
- la détermination d'un jeu de données de recherche au moins à l'aide d'une partie du jeu de données courant et en fonction de la paire d'étiquettes sélectionnée, et
- la recherche de la fonction de classification par classification symbolique à partir d'un ensemble donné d'opérateurs et des paires du jeu de données de recherche.

L'invention propose ainsi de recourir à la classification symbolique pour obtenir la fonction de classification d'un nœud donné. La classification symbolique permet de générer des fonctions candidates à partir d'un ensemble donné d'opérateurs et des variables d'entrée disponibles et de les tester. Elle ne requiert aucune autre connaissance du système.

Selon encore un autre aspect de l'invention, ledit au moins un critère de division comprend un critère de performance de classification de la fonction de classification obtenue, et le procédé comprend, préalablement à la division, la vérification dudit critère de performance, comprenant la détermination d'un premier ratio entre un nombre de paires du jeu de données courant comprenant l'étiquette représentative d'un état de fonctionnement nominal classées par la fonction de classification dans la classe nominale sur un nombre total de paires du jeu de données courant comprenant ladite étiquette, la détermination d'un deuxième ratio entre un nombre de paires du jeu de données de recherche classées par la fonction de classification dans la classe parmi la classe nominale et la classe de panne qui correspond à leur étiquette et un nombre total de paires dans le jeu de données de recherche, et la comparaison du premier et du deuxième ratios respectivement à un premier et un deuxième seuils donnés, le critère de performance de classification étant vérifié lorsque le premier et le deuxième seuils sont franchis.

Le premier test permet de vérifier que la fonction de classification trouvée classe correctement les paires associées à l'étiquette représentative d'un fonctionnement nominal. Par exemple, on considère un premier seuil de ratio de 95%, ce qui permet de s'assurer que sensiblement toutes les paires du jeu de données courant, comprenant l'étiquette représentative d'un état de fonctionnement nominal, sont bien classées par la fonction de classification. Le deuxième test permet de vérifier que la fonction de classification classe correctement les paires qui ont servi à la rechercher. Par exemple on utilise un deuxième seuil de ratio minimal fixé à 90%.

Lorsque ces deux tests sont réussis, on considère que la fonction de classification trouvée forme une relation de redondance analytique pour le système. Une telle relation de redondance analytique est un exemple de générateur de résidus, c'est-à-dire une expression de variables, ici des variables observables du système à diagnostiquer que la fonction de classification prend en entrée, qui produit zéro (la classe nominale) pour les cas nominaux et une valeur non nulle (la classe de panne) pour tous les autres cas. Les cas de panne qu'elle discrimine en les classant dans la classe de panne constituent son support de pannes ou de fautes. Selon l'invention, on a recherché une fonction de classification qui produit en particulier une valeur non nulle pour les paires comprenant la deuxième étiquette. On comprend qu'elle peut produire une valeur non nulle pour d'autres étiquettes du groupe d'étiquettes que la deuxième étiquette, à l'exception de la première.

Selon un autre aspect de l'invention, suite à la division du nœud courant et tant qu'il reste au moins un nœud suivant non traité selon un ordre de parcours donné de l'arbre de décision, le procédé comprend l'itération du traitement pour le nœud suivant.

De la sorte, on essaie de diviser tous les nœuds de l'arbre qui peuvent l'être.

Selon encore un autre aspect de l'invention, lorsque le critère de performance de classification n'a pas été vérifié, le traitement du nœud courant comprend la sélection d'une nouvelle paire d'étiquettes tant qu'il reste une paire d'étiquettes non encore sélectionnée dans le jeu de données courant.

De la sorte on réalise la classification symbolique sur toutes les paires d'étiquettes possibles tant qu'il en reste à tester dans le jeu de données courant et qu'on n'a pas trouvé de fonction de classification qui réalise une ARR du système pour la paire d'étiquettes sélectionnée.

Selon un autre aspect de l'invention, lorsque le jeu de données courant comprend des paires comprenant l'étiquette représentative d'un état de fonctionnement nominal, la paire d'étiquettes sélectionnée comprend ladite étiquette comme première étiquette et une étiquette représentative d'un état de panne comme deuxième étiquette.

Tant que le cas nominal est représenté dans le sous-jeu courant, on privilégie la discrimination entre le cas nominal et un type de panne lui aussi représenté dans le-jeu de données courant.

Selon encore un autre aspect de l'invention, le jeu de données de recherche comprend toutes les paires du jeu de données courant comprenant l'étiquette, parmi la première et la deuxième étiquettes, qui est la moins représentée en nombre dans le jeu de données courant, et autant de paires du jeu de données courant comprenant l'autre étiquette.

Ceci permet d'équilibrer le jeu de données de recherche et d'augmenter les chances d'obtenir une fonction de classification suffisamment performante.

Selon un autre aspect de l'invention, lorsque le jeu de données courant ne comprend pas de paires comprenant l'étiquette représentative d'un état de fonctionnement nominal, le jeu de données courant comprenant un premier nombre de paires comprenant la première étiquette et un deuxième nombre de paires comprenant la deuxième étiquette, ledit premier nombre étant supérieur au deuxième nombre, le jeu de données de recherche est formé d'un troisième nombre des paires comprenant la première étiquette, inférieur ou égal au deuxième nombre, du deuxième nombre de paires et d'un quatrième nombre de paires comprenant l'étiquette représentative d'un état de fonctionnement nominal du système égal, le quatrième nombre étant égal à une différence le deuxième et le troisième nombres.

Dans ce cas, la paire d'étiquettes sélectionnée comprend deux étiquettes représentatives d'un état de panne.

L'ajout de ces paires comprenant l'étiquette de fonctionnement nominal dans le jeu de données de recherche associé à la paire (panne 1, panne 2) permet de mettre en œuvre la classification symbolique en utilisant un jeu de données de recherche équilibré et de trouver une fonction de classification qui réalise une ARR qui produit 0 (la classe nominale) pour les paires comprenant l'étiquette « panne 2 » ou l'étiquette représentative d'un état de fonctionnement nominal et une autre valeur que zéro (la classe de panne) pour les paires comprenant l'étiquette « panne 1 ». Autrement dit, on recherche une ARR qui est « sensible » (au moins) à la panne 1, mais n'est pas sensible à la panne 2 ni bien sûr à l'état de fonctionnement nominal.

Par exemple, les paires comprenant l'étiquette représentative d'un état de fonctionnement nominal sont issues du jeu de données d'entraînement initial et choisies aléatoirement. Par exemple, elles sont stockées dans une mémoire de sorte à être disponibles pour réaliser l'équilibrage des jeux de données de recherche des nœuds de l'arbre au fur et à mesure de leur traitement.

Par exemple, on garde un nombre de paires comprenant la première étiquette qui est choisi égal à la moitié du deuxième nombre de paires comprenant la deuxième étiquette et on complète avec un nombre de paires comprenant l'étiquette représentative d'un état de fonctionnement nominal égal à lui aussi à la moitié du nombre de paires comprenant la deuxième étiquette. Un avantage est d'équilibrer le jeu de recherche.

On comprend qu'ici la paire d'étiquettes de panne est ordonnée et que le jeu de données de recherche associé à cette paire (panne 1, panne 2) et utilisé pour rechercher une fonction de classification ARR, n'est pas déterminé de la même façon que celui associé à la paire (panne 2, panne 1).

On comprend aussi qu'il est avantageux de générer et de tester toutes les permutations possibles de paires d'étiquettes du sous-jeu courant puisqu'elles ne se basent pas sur le même jeu de données de recherche.

Selon encore un autre aspect de l'invention, la recherche d'une fonction de classification par classification symbolique comprend la mise en œuvre d'un algorithme génétique comprenant :
- la génération aléatoire d'une pluralité de fonctions candidates (c) associant à plusieurs desdites variables observables une valeur de classification réelle,
- Pour chaque fonction candidate générée, l'évaluation de la fonction candidate comprenant l'application de ladite fonction candidate au jeu de données de recherche, des valeurs de classification réelle obtenues, et l'application d'une fonction de transformation auxdites valeurs de classification réelle, des valeurs transformées binaires étant obtenues et la détermination d'un score d'ajustement (S) de la fonction candidate au jeu de données de recherche à partir desdites valeurs transformées binaires,
- la sélection d'au moins une fonction candidate parmi la pluralité de fonctions candidates générées à l'aide du score d'ajustement, ladite au moins une fonction candidate générée étant associée audit au moins un meilleur score d'ajustement selon un critère donné,
- la mutation de la au moins une fonction candidate sélectionnée et l'itération des étapes de test et de sélection aux fonctions mutées, tant qu'au moins un critère d'arrêt n'est pas satisfait.

Un avantage de la fonction de transformation utilisée est qu'elle produit des valeurs transformées prenant directement ses valeurs dans l'ensemble {0,1}, contrairement à l'art antérieur qui utilise généralement une fonction sigmoïde, dont les valeurs sont comprises entre 0 et 1, mais restent réelles. Ceci permet d'obtenir directement des valeurs assimilables à la classe nominale et à la classe de panne, donc directement exploitable dans la construction de l'arbre de décision.

Par exemple, la fonction de transformation est une fonction dite puits, qui vaut zéro autour de zéro et un partout ailleurs sur l'ensemble des réels. Un avantage de cette fonction est qu'elle est très simple.

Selon encore un autre aspect de l'invention, ledit au moins un critère d'arrêt comprend au moins :
la détermination d'une stagnation du score d'ajustement pendant un nombre d'itérations donné, et
un nombre maximal d'itérations des étapes d'évaluation et de sélection est atteint,

Par exemple, le nombre d'itérations donné est égal à 4 et le nombre maximal d'itérations est choisi égal à 50. .Un avantage de telles conditions d'arrêt est qu'elles permettent de réaliser un bon compromis entre efficacité et coût en termes de ressources de calcul et de mémoire.

Corrélativement l'invention concerne aussi un procédé de diagnostic d'un système comprenant une pluralité de composants, ledit procédé comprenant :
- l'obtention de valeurs mesurées par des capteurs de variables observables représentatives d'un fonctionnement dudit système, un vecteur d'entrée comprenant les valeurs mesurées desdites variables observables étant formé ;
- l'application audit vecteur d'un arbre de décision construit par le procédé précité à partir d'un jeu de données d'entraînement comprenant des vecteurs de variables observables de même format que le vecteur d'entrée, ladite application comprenant la propagation du vecteur d'entrée dans l'arbre de décision jusqu'à un nœud non divisé, dit nœud feuille, ledit nœud feuille étant associé à au moins une étiquette appartenant à un groupe comprenant une étiquette représentative d'un état de fonctionnement nominal du système et une pluralité d'étiquettes représentatives chacune d'un état de panne du système, et
- la mise à disposition d'un résultat de diagnostic, comprenant la dite au moins une étiquette associée au nœud feuille comprenant ledit vecteur.

L'invention permet d'obtenir un diagnostic précis de l'état de fonctionnement du système qui isole les pannes et indique, en cas de panne, quels composants sont impactés. Pour l'obtenir, il suffit de lire la ou les étiquettes associée(s) au nœud feuille dans lequel a abouti le vecteur d'entrée. Elle(s) représente(nt) l'état de fonctionnement du système correspondant aux valeurs mesurées des variables observables du vecteur d'entrée.

L'invention concerne également un dispositif de construction d'un arbre de décision pour le diagnostic d'un système comprenant une pluralité de composants, ledit dispositif comprenant au moins une mémoire et un processeur configuré pour mettre en œuvre :
- l'obtention d'un jeu de données d'entraînement comprenant des paires, unedite paire comprenant un vecteur de valeurs mesurées de variables observables représentatives d'un fonctionnement du système et une étiquette associée, l'étiquette appartenant à un groupe d'étiquettes comprenant une étiquette représentative d'un état de fonctionnement nominal dudit système et des étiquettes représentatives chacune d'un état de panne d'undit composant de la pluralité,
- le traitement d'un nœud courant de l'arbre de décision associé à un sous-ensemble du jeu de données d'entraînement, dit jeu de données courant, issu du jeu de données d'entraînement, ledit traitement comprenant, lorsqu'au moins un critère de division est satisfait, la division du nœud courant en un premier et un deuxième nœuds fils par application d'une fonction de classification obtenue à partir du jeu de données courant et définie pour associer à plusieurs desdites variables observables, une première classe, dite classe nominale, représentative de l'état de fonctionnement nominal du système ou une deuxième classe, dite classe de panne, représentative desdits états de panne dudit système, et classer les paires du sous-jeu de données courant comprenant une première étiquette du groupe d'étiquettes dans la classe nominale et les paires du sous-jeu de données comprenant une deuxième étiquette du groupe d'étiquettes dans la classe de panne, et la propagation desdites paires classées dans la classe nominale dans un premier sous-jeu de données du premier nœud fils et desdites paires classées dans la classe de panne dans un deuxième sous-jeu de données du deuxième nœud fils, et
- la mise à disposition de l'arbre de décision pour le diagnostic du système.

L'arbre de décision ainsi construit est par exemple stocké dans la mémoire du dispositif. En variante il peut être transmis à un dispositif distant par un réseau de communication. Avantageusement, un tel dispositif met en œuvre le procédé de construction précité dans ses différents modes de réalisation.

L'invention concerne également un dispositif de diagnostic d'un système comprenant une pluralité de composants, ledit dispositif comprenant une mémoire et un processeur configuré pour mettre en œuvre :
- l'application audit vecteur d'un arbre de décision construit par le procédé de construction d'un arbre de décision précité à partir d'un jeu de données d'entraînement comprenant des vecteurs de variables observables de même format que le vecteur d'entrée, ladite application comprenant la propagation du vecteur d'entrée dans l'arbre de décision jusqu'à un nœud non divisé, dit nœud feuille, ledit nœud feuille étant associé à une étiquette appartenant à un groupe comprenant une étiquette représentative d'un état de fonctionnement nominal du système et une pluralité d'étiquettes représentatives chacune d'un état de panne d'undit composant du système,
- l'obtention de l'étiquette associée au nœud feuille de l'arbre de décision comprenant ledit vecteur, et
- la mise à disposition d'un résultat de diagnostic , comprenant l'étiquette obtenue.

Par exemple, ce dispositif comprend une mémoire qui stocke l'arbre de décision et le résultat du diagnostic. Le résultat du diagnostic peut aussi être transmis à un équipement distant par l'intermédiaire d'un réseau de communication.

Selon un exemple de réalisation non limitatif de l'invention, ce dispositif est intégré dans un équipement terminal.

L'invention concerne aussi un produit programme d'ordinateur comportant des instructions pour l'exécution d'un des procédés précités.

### Brève description des figures

D'autres caractéristiques et avantages de l'invention apparaîtront à l'examen de la description détaillée ci-après, et des dessins annexés, sur lesquels :
[Fig. 1a] illustre schématiquement un exemple de mise en œuvre de dispositifs selon l'invention dans leur environnement,
[Fig. 1b] illustre schématiquement un exemple simplifié de système comprenant plusieurs composants, dit « polybox »,
[Fig. 2] illustre schématiquement sous forme de logigramme les étapes d'un procédé de construction d'un arbre de décision pour le diagnostic d'un système comprenant une pluralité de composants selon l'invention,
[Fig. 3a] illustre schématiquement un exemple d'arbre de décision binaire comprenant un nœud racine, des nœuds intermédiaires et des nœuds feuilles,
[Fig. 3b] illustre schématiquement un exemple de jeu de données d'entraînement comprenant des données d'entraînement associées à différentes étiquettes représentatives d'un état de fonctionnement du système, selon l'invention,
[Fig. 3c] illustre sous forme de tableau un exemple de répartition des données d'entraînement entre les nœuds d'un arbre de décision construit par le procédé selon un mode de réalisation de l'invention,
[Fig. 4a] illustre schématiquement des exemples de fonctions candidates générées par classification symbolique à partir de variables observables du système et d'un ensemble d'opérateurs donné, selon l'art antérieur,
[Fig. 4b] détaille les étapes d'un algorithme génétique de génération et d'évaluation de fonctions candidates pour le diagnostic de données d'entrainement par classification symbolique, selon un exemple de réalisation de l'invention,
[Fig. 4c] illustre schématiquement un exemple de fonction de transformation d'une image d'une fonction candidate en une classe parmi une première classe et une deuxième classe, selon un exemple de réalisation de l'invention,
[Fig. 5a] et [Fig. 5b] illustrent schématiquement des exemples de division d'un nœud courant en deux nœuds fils, par application de la relation de redondance analytique déterminée pour ce nœud courant, selon un mode de réalisation de l'invention,
[Fig. 5c] illustre schématiquement un exemple d'arbre de décision construit par le procédé selon l'invention et détaille les relations de redondance analytique associées aux nœuds divisés,
[Fig. 6] illustrent schématiquement sous forme de logigramme les étapes d'un procédé de diagnostic d'un système comprenant une pluralité de composants selon un mode de réalisation de l'invention,
[Fig. 7] illustre schématiquement un exemple de structure matérielle d'un dispositif mettant en œuvre l'un ou l'autre des procédés selon l'invention, et
[Fig. 8] illustre schématiquement un exemple concret de système industriel auquel l'invention s'applique.

### Description détaillée de l'invention

L'invention concerne le diagnostic d'un système industriel comprenant plusieurs composants dont le fonctionnement peut être nominal ou défectueux. En cas de fonctionnement défectueux, l'origine de la panne peut provenir de l'un ou plusieurs des composants du système.

L'invention repose sur la construction d'un arbre de décision binaire par classification symbolique en utilisant les principes de l'analyse structurelle pour déterminer des relations de redondance analytique entre des variables observables du système et isoler des types de panne ou faute affectant chacun un ou plusieurs composants du système. Une relation de redondance analytique donnée est associée à un ensemble de pannes donné, appelé aussi support de fautes, et à un nœud courant de l'arbre de décision. Sur réception d'un vecteur de variables observables du système, reçu du niveau supérieur de l'arbre de décision, le nœud courant lui applique cette relation de redondance analytique pour décider s'il doit être propagé vers l'un ou l'autre de ces nœuds fils du niveau inférieur. Les nœuds feuilles, c'est-à-dire non divisés, de l'arbre de décision réalisent chacun le diagnostic d'un des états de fonctionnement du système (l'état de fonctionnement nominal et les différents types de pannes que peut rencontrer le système).

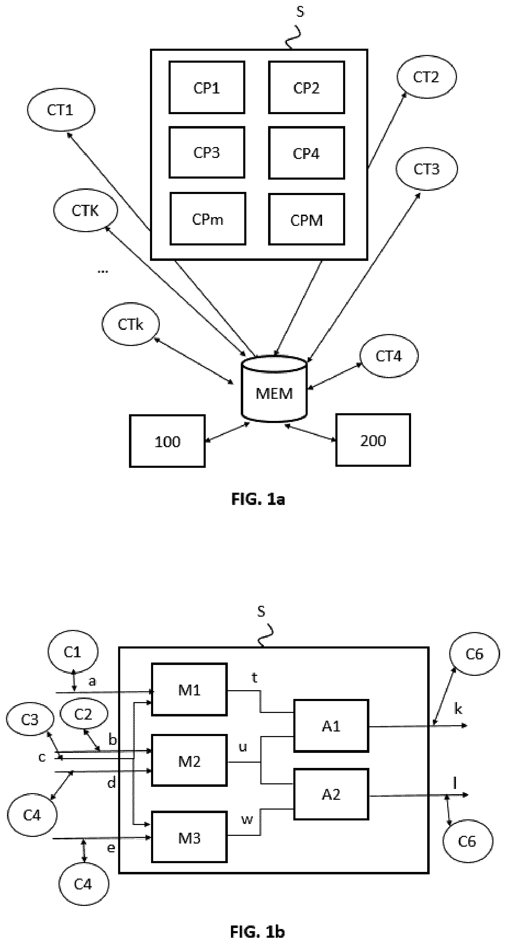

L'arbre de décision ainsi construit est un arbre binaire multivarié, au sens où dans un nœud donné, il réalise une discrimination à l'aide d'un critère qui utilise plusieurs variables observables du système (par opposition à un nœud d'un arbre monovarié qui n'utilise qu'une seule variable). Il peut ensuite être utilisé pour détecter et isoler un des types de panne donnés à partir d'un vecteur de données de variables observables mesurées. En relation avec la FIG. 1a, on considère un exemple de mise en œuvre de l'invention pour un système industriel S, comprenant plusieurs composants CP1, CP2, CPm, ..., CPM, avec M entier supérieur ou égal à 2 et dont on observe une pluralité N de variables observables vo1, vo2,...,voN, avec n entier supérieur ou égal à 2, représentatives d'un fonctionnement d'au moins undit composant et dont les valeurs sont par exemple mesurées par K capteurs CT1, CT2,...CTK, avec K entier supérieur ou égal à 2, agencés à proximité des M composants du système S. Par exemple, lesdites variables comprennent au moins des entrées et des sorties des composants dudit système. Elles peuvent comprendre en outre tout autre paramètre indicatif d'un état de fonctionnement du système au niveau d'un de ses composants, comme une température, une pression, un volume de fluide, etc.

Les données de mesure collectées par les capteurs sont par exemple stockées dans une mémoire MEM ou transmises à un dispositif de collecte (non représenté) via des moyens de communication. Dans cet exemple, l'invention est mise en œuvre par un dispositif 100 de construction d'un arbre de décision binaire. Ce dispositif 100 est configuré pour obtenir un jeu de données d'entraînement comprenant des paires, unedite paire comprenant un vecteur de valeurs de variables observables et une étiquette associée (f(x1,x2,...,xM)) audit vecteur, l'étiquette appartenant à un groupe d'étiquettes comprenant une étiquette représentative d'un état de fonctionnement nominal du système et une pluralité d'étiquettes représentatives chacune d'un type de panne d'un composant du système, construire un arbre de décision et mettre à disposition l'arbre de décision pour le diagnostic du système. Par exemple, l'arbre de décision ainsi construit est stocké dans la mémoire MEM.

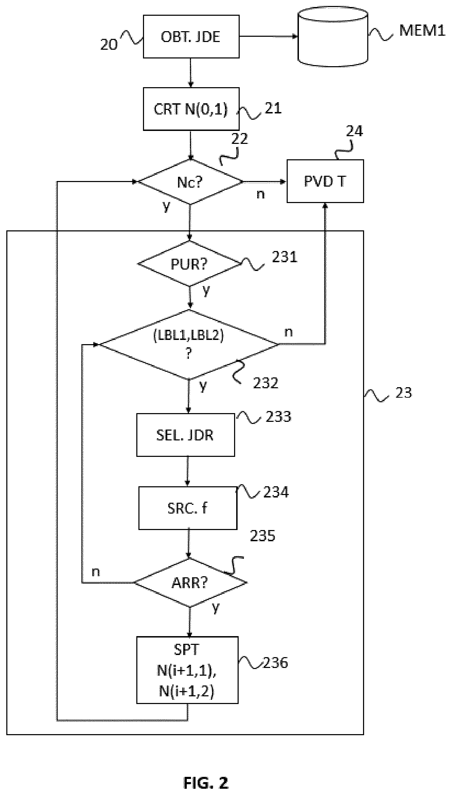

Selon l'exemple de la FIG. 1a, le dispositif 100 est configuré pour mettre en œuvre un procédé de construction d'un arbre de décision pour le diagnostic d'un système comprenant plusieurs composants, dans ses différents modes de réalisation, qui seront détaillés ci-après, en relation avec la FIG. 2.

Dans cet exemple, on considère aussi un dispositif 200 de diagnostic du système S comprenant plusieurs composants, configuré pour obtenir des valeurs mesurées par les capteurs de variables observables et pour former un vecteur d'entrée présentant un même format que les vecteurs des paires du jeu de données d'entraînement utilisé pour construire l'arbre de décision, appliquer l'arbre de décision obtenu par le dispositif 100 audit vecteur, obtenir l'étiquette associée au nœud feuille de l'arbre de décision associé audit vecteur, et mettre à disposition un résultat de diagnostic comprenant l'étiquette obtenue.

Par exemple, le dispositif 200 obtient l'arbre de décision construit par le dispositif 100 de la mémoire MEM et il stocke le résultat de diagnostic dans cette même mémoire. En variante, il transmet le résultat de diagnostic à un équipement distant ou à un utilisateur par l'intermédiaire d'une interface utilisateur.

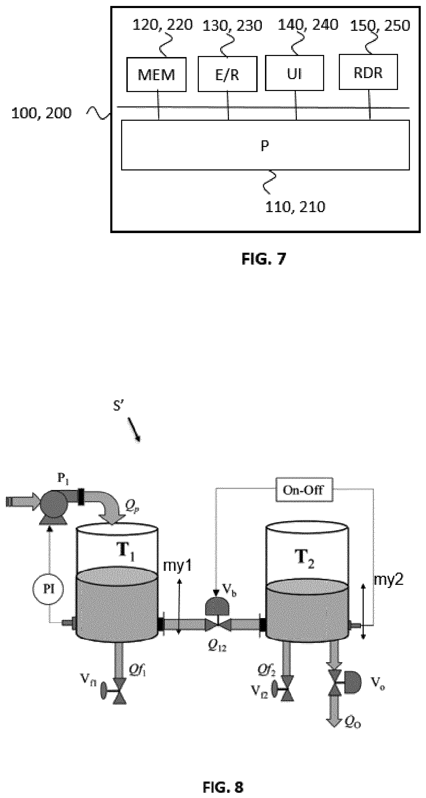

Un exemple de structure matérielle des dispositifs 100 et 200 sera décrit en relation avec la FIG. 7.

L'invention s'applique au diagnostic de tout type de système industriel complexe dont les variables observables sont statiques. Elle permet de détecter et d'isoler un état de fonctionnement défectueux d'un de ses composants. Il s'agit par exemple d'un réservoir d'eau dont on souhaite par exemple maintenir un débit de sortie à une valeur donnée, un bâtiment dont on veut diagnostiquer l'état de délabrement ou encore une imprimante 3D dont on veut diagnostiquer la qualité d'impression. Des exemples seront détaillés plus avant, en relation avec les FIGS. 1b et 8.

En relation avec la FIG. 1b, on considère d'abord et à titre illustratif un exemple de système S simplifié, dit polybox. Ce système « polybox » comprend M = 5 composants M1, M2, M3, A1 et A2. Les variables observables considérées sont les entrées a, b, c, d et e, les entrées/sorties intermédiaires t, u et w et les sorties k et l. Le composant M1 possède les entrées a et c, le composant M2 les entrée b et d, le composant M3 les entres c et e. Le composant A1 a pour entrées t et u et pour sortie k et le composant A2 a pour entrées u et w et pour sortie l. Dans cet exemple très simple, les composants M1, M2, M3 sont des multiplicateurs, qui multiplient entre elle les données d'entrée et produisent le résultat de cette multiplication en sortie et les composants A1, A2 sont des additionneurs, qui somment les données d'entrée et produisent le résultat de cette somme en sortie. Le système « polybox » est représentatif des systèmes industriels qui peuvent être traités par l'invention, du fait que chacun de ses composants peut représenter n'importe quel composant d'un système. On fait ici l'hypothèse que plusieurs fautes ou pannes peuvent se produire en même temps. Cependant, on note que le polybox est un système statique qui n'est donc pas représentatif des systèmes dynamiques.

En relation avec la FIG. 2 on décrit maintenant les étapes du procédé de construction d'un arbre binaire de décision selon un exemple de réalisation non limitatif de l'invention. Par exemple, ce procédé est mis en œuvre par le dispositif 100.

En 20, on obtient un jeu de données d'entraînement JDE. Il comprend des paires associant à un vecteur de variables observables représentatives du fonctionnement du système S, une étiquette représentative d'un état de fonctionnement de ce système parmi une pluralité d'étiquettes (M+1) comprenant une étiquette représentative d'un état de fonctionnement nominal du système et M étiquettes représentatives de types de panne des M composants du système. Par exemple, ce jeu de données JDE est stocké dans une mémoire MEM1 accessible au dispositif 100.

Par exemple, pour le système « polybox » de la FIG. 1b, on a 6 étiquettes, une étiquette correspondant au fonctionnement nominal LBL_N, une étiquette correspondant à une panne LBL_M1 du composant M1, une étiquette correspondant à une panne LBL_M2 du composant M2, une étiquette correspondant à une panne LBL_M3 du composant M3, une étiquette correspondant à une panne LBL_A1 du composant A1 et une étiquette correspondant à une panne LBL_A2 du composant A2. Le jeu de données d'entraînement JDE comprend une pluralité de vecteurs de K variables observables V(a, b, c, d, e, k, l) avec K supérieur ou égal à 2, chaque vecteur étant associé à une des étiquettes précédentes. On note que dans l'exemple de la FIG. 1b, K vaut 7 et que les variables t, u et w n'ont pas été observées. Par exemple, les valeurs de variables observables constituant le vecteur V sont mesurées par K capteurs agencés dans et/ou à proximité des composants du système S. Par exemple, on a obtenu 30000 paires (vecteur, étiquette) qu'on sépare en un jeu de données d'entraînement JDE comprenant 23350 paires et un jeu de test JDT comprenant 6650 paires.

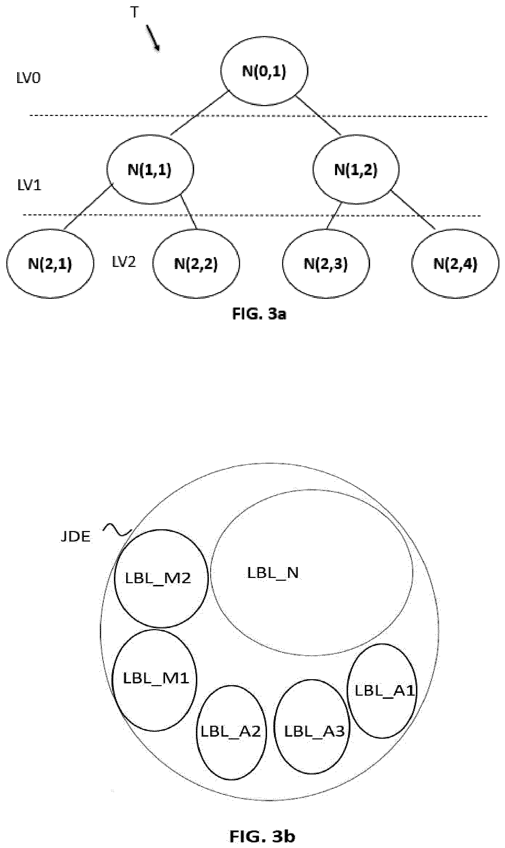

Selon l'invention, on construit un arbre binaire de décision T, selon une approche de haut en bas, ou autrement dit, de la racine vers les feuilles, à partir du jeu de données d'entraînement JDE obtenu. Un exemple d'arbre de décision T est illustré par la FIG. 3a. Dans cet exemple, il comprend un nœud racine N(0,1) à un premier niveau LV0, deux nœuds fils N(1,1) et N(1,2) du nœud racine à un deuxième niveau LV1 et, à un troisième niveau LV2 deux nœuds fils N(2,1) et N(2,2) du nœud fil N(1,1) et deux nœuds fils N(2,3) et N(2, 4) du nœud fils N(1,2).

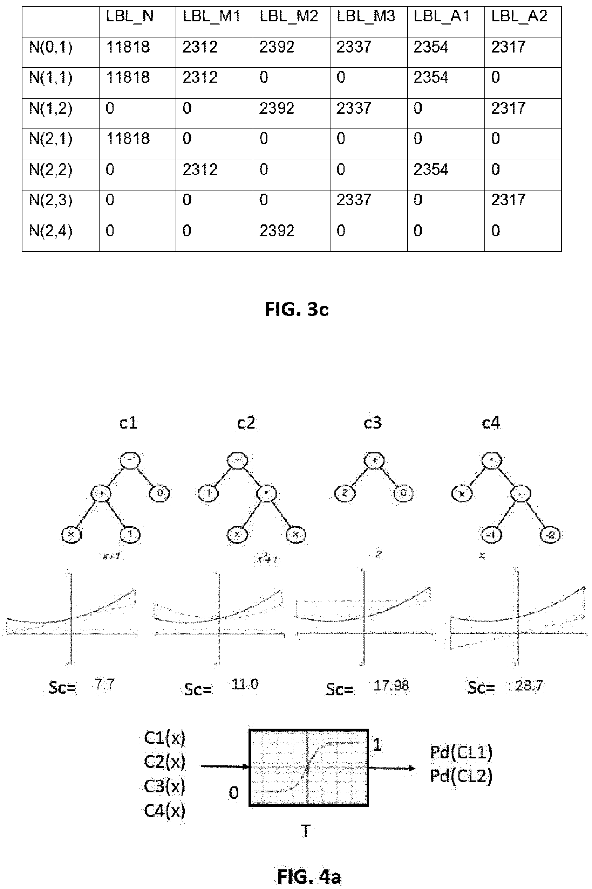

En 21, on crée le nœud racine N(0,1), dans lequel on propage l'ensemble des paires du jeu de données d'entraînement JDE. Un exemple de jeu d'entraînement JDE est illustré par la FIG. 3b. Il comprend un sous-jeu de paires comprenant l'étiquette de fonctionnement nominal LBL_N, un sous-jeu de paires SJ_M1 comprenant l'étiquette LBL_M1 de panne du composant M1, un sous-jeu SJ_M2 de paires comprenant l'étiquette LBL_M2 de panne du composant M2, un sous-jeu de paires SJ-M3 comprenant l'étiquette LBL_M3 de panne du composant M3, un sous-jeu SJ_A1 de paires comprenant l'étiquette LBL_A1 de panne du composant A1 et un sous-jeu SJ-A2 de paires comprenant l'étiquette LBL_A2 de panne du composant A2. Par exemple, le jeu de données d'entraînement JDE comprend 23530 paires qui se répartissent dans les sous-jeux précédents comme illustré par la première ligne du tableau de la FIG. 3c. Dans cet exemple, parmi les sous-jeux SJ_M1, SJ_M2, SJ_M3, SJ_A1 et SJ_A2, le sous-jeu SJ_M2 est le plus peuplé.

En 22, on sélectionne un nœud courant Nc à traiter selon un ordre donné de parcours des nœuds déjà créés de l'arbre T. A l'initialisation, seul le nœud racine N(0,1) existe, il est donc sélectionné comme nœud courant.

En 23, on traite le nœud courant Nc. Il est associé à un jeu de données courant JDC. Dans cette première itération, il s'agit du nœud racine N(0,1) et du jeu de données d'entraînement initial JDE, mais le traitement qui va être décrit s'applique indifféremment à tous les nœuds courants successivement traités.

En 231, on teste si le nœud courant Nc peut être divisé. On vérifie ici un premier critère de division qui est en réalité un critère de pureté du nœud et s'apprécie au regard d'une composition du jeu de données courant.

Dans un exemple de réalisation de l'invention, on réalise le test de pureté suivant :
- on détermine l'étiquette la plus représentée en nombre dans le jeu de données courant JDC et un ratio d'un nombre de paires du jeu de données courant associé à cette étiquette,
- on compare le ratio obtenu à un seuil de pureté donné. Par exemple, on considère que le nœud est pur si le ratio est d'au moins Y% avec Y = 95. Bien sûr, il s'agit d'un paramètre de l'algorithme, qui peut prendre d'autres valeurs en fonction du problème à résoudre.

Si le résultat est négatif, c'est-à-dire que le nœud courant est impur, on décide qu'il peut être divisé et on passe à l'étape suivante 232. Sinon (le nœud courant est pur), on retourne à l'étape 22 pour sélectionner un autre nœud courant.

On note que le test de pureté est aussi appliqué au nœud racine pour couvrir le cas où le jeu de données d'entraînement comprendrait une majorité écrasante de paires associées à une seule et même étiquette.

En 232, on sélectionne une paire d'étiquettes (LBL1, LBL2) représentées dans les paires du jeu de données courant JDC.

Selon un exemple de réalisation, on privilégie l'étiquette LBL_N représentative d'un état de fonctionnement nominal du système, c'est-à-dire que si elle est représentée dans le jeu de données courant, on la sélectionne comme première étiquette et on sélectionne comme deuxième étiquette une étiquette représentative d'un type de panne du système, elle-aussi représentée dans le jeu de données courant JDC. Par exemple, on choisit l'étiquette de panne la plus représentée dans le jeu de données courant.

Dans l'exemple de la figure 3c, pour le nœud racine N(0,1), on sélectionne l'étiquette LBL_N représentative d'un fonctionnement nominal du système S. Il se trouve que c'est la plus représentée en nombre dans les paires du jeu de données d'entraînement (11818 paires).On choisit comme deuxième étiquette l'étiquette LBL_M2 représentative d'une panne du composant M2 qui est la plus représentée après l'étiquette LBL-N avec 2392 paires. On obtient donc la paire d'étiquettes (LBL_N, LBL_M2).

En 233, on détermine un jeu de données de recherche JDR, en fonction de la paire d'étiquettes sélectionnée et du jeu de données courant. Par exemple, on constitue le jeu de données de recherche JDR de sorte qu'il comprenne autant de paires du jeu de données courant associées à l'étiquette LBL_N que de paires associées à l'étiquette de panne LBL-M2. On obtient donc un jeu de données de recherche JDR formé de 2392 paires comprenant l'étiquette LBL_N et de 2392 paires comprenant l'étiquette LBL_M2.

En 234, on recherche une fonction de classification qui a pour variables x au moins une partie des variables observables des paires du jeu de données de recherche JDR et pour image f(x), qui vaut une première classe CL1 pour les vecteurs des paires comprenant l'étiquette LBL_N et une deuxième classe CL2 pour les vecteurs des paires comprenant l'étiquette LBL_M2.

Selon l'invention, cette fonction de classification est recherchée en utilisant les principes d'une méthode dite de classification symbolique, qui vont maintenant être expliqués.

La régression symbolique est une méthode d'estimation d'une fonction *f* permettant d'obtenir des données de sortie à partir de données d'entrée, connaissant des paires (*x, f* (*x*)) avec *x =*(*x*1*, x*2*,* ..., *xn*) ∈ R*ⁿ* et *f* (*x*) ∈ R. Il s'agit d'une sorte de régression qui ne fait pas d'hypothèse sur la forme de la solution. On précise uniquement une liste d'opérateurs utilisables, tels que par exemple les opérateurs addition (+), soustraction ( -), multiplication ( x), division (/), cosinus (cos), sinus ( sin), exponentielle (exp), racine (√), logarithme (log), logarithme népérien (In) etc. A partir de ces opérateurs et des données d'entrée x, on génère des fonctions candidates, comme illustré par la FIG. 4a, qui sont ensuite évaluées.

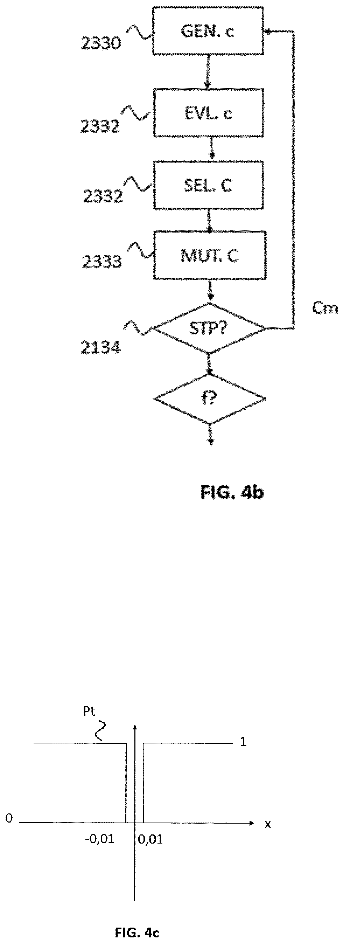

Cette méthode est destinée à produire une solution analytique précise. Elle s'appuie pour ce faire sur un algorithme génétique, dont un exemple sera présenté ci-après en relation avec la FIG. 4b.

De façon connue en soi et par exemple décrite dans l'ouvrage de Poly et al., intitulé « A field guide to genetic programming », chapitre 4, publié en 2008 par Lulu Press (lulu.com), https://libros.metabiblioteca.org/items/22e518bc-10f3-4568-af42-aca90b8320d1, un tel algorithme génétique prend en entrée un ensemble de paires connues à l'avance (*x, f* (*x*)) et un ensemble d'opérateurs *O* et recherche la meilleure combinaison *Cx,O* de variables (*x*1*, x*2*,* ..., *xn*) et d'opérateurs de sorte que *Cx,O = f* (*x*).

À chaque génération, chaque solution candidate c est évaluée sur l'ensemble de données du jeu de données de recherche et reçoit un score d'ajustement (en anglais, « fitness »), qui représente un degré d'adéquation de la solution c avec la fonction f, comme illustré par la FIG. 4a. Sous chaque fonction candidate c1 à c4, les courbes avec des traits pleins représentent la fonction objectif en noir (f en fonction de x, qui est donc la même sur toutes les courbes) et celles avec des pointillés représentent la fonction candidate c1 à C4. Le score d'ajustement indique si la fonction candidate est proche ou éloignée de l'objectif visé.

Ce score est par exemple déterminé à l'aide de la formule suivante : $Sc \left(c\right) = 1 / n {Σ}_{x ∈ JDR} {\left(f\left(x\right)-c\left(x\right)\right)}^{2}$ (Equation 1) où *n* est le nombre de paires dans le jeu de données (c'est-à-dire le nombre de paires (*x, f* (*x*))).

La classification symbolique est une méthode de classification binaire permettant d'estimer une fonction *f* (de R*ⁿ* dans R) connaissant des paires (*x,* label) avec *x =* (*x*1*, x*2*,* ..., *xn*) ∈ R*ⁿ* et label ∈ {0, 1}. Tout comme la régression symbolique, elle ne fait pas d'hypothèse sur la forme de la solution, fournit une solution analytique précise obtenue elle aussi à l'aide d'un algorithme génétique. De même que pour la régression symbolique, l'algorithme génétique prend en entrée un ensemble de paires (*x*, label) et un ensemble d'opérateurs *O* (par exemple +, *, -, /, √, | |, log, etc.). Il recherche également la meilleure combinaison *Cx,O* de variables (*x*1*, x*2*,* ..., *xn*) et d'opérateurs de sorte que *Cx,O = f* (*x*)*.* La classification symbolique s'apparente donc à la régression symbolique, à l'exception des deux aspects suivants :
- l'ensemble des valeurs de label appartient à {0, 1}, plutôt qu'à l'ensemble des réels, et
- le score d'ajustement est calculé différemment.

En effet, les fonctions candidates, lorsqu'elles sont appliquées à *x*, donnent un nombre dans R.

La classification symbolique comprend donc une étape supplémentaire par rapport à la régression symbolique, qui consiste à appliquer une fonction de transformation T à l'image *y* = c(*x*) ∈ R d'une fonction candidate c et qui produit une image T(*y*) ∈ [0, 1]. Cette fonction de transformation T peut prendre plusieurs formes. Par exemple, il peut s'agir d'une fonction sigmoïde, comme illustrée par la figure FIG 4a. Ensuite, si la valeur de T(y) est inférieure à 0.5, la classe 0 est associé à x et sinon la classe 1 est associée à *x.*

Par exemple, le score d'ajustement Sc met en œuvre une fonction de perte logarithmique, comme décrit dans l'ouvrage de Bishop et al., intitulé « Pattern Recognition and Machine Learning », publié par Springer, en 2006, page 209, selon la formule suivante : $Sc \left(c\right) = - 1 / n Σ {x}_{∈ JDR} label * ln \left(T\left(c\left(x\right)\right)\right) + \left(1-label*ln\left(1-T\left(c\left(x\right)\right)\right)\right)$ (Equation 2) où *n* est le nombre d'individus dans le jeu de données de recherche (c'est-à-dire le nombre de paires (*x,* label)) et T est la fonction de transformation choisie.

Selon un exemple de réalisation de l'invention illustré par la FIG. 4b, l'étape 234 de recherche d'une fonction f associée au nœud courant comprend les sous-étapes suivantes :
- la génération aléatoire 2340 d'une pluralité de fonctions candidates c, à partir d'un ensemble donné d'opérateurs. Un exemple illustratif très simple est présenté en FIG. 4a. Dans cet exemple, 4 fonctions candidates c1, c2, c3 et c4 sont générées à partir de l'opérateur + pour c1, des opérateurs + et x pour c2, + pour c3 et * et - pour c4. On note que tous les opérateurs disponibles ne seront pas nécessairement exploités pour générer les fonctions candidates. En revanche, si certains opérateurs sont manquants, certaines fonctions candidates potentiellement intéressantes ne pourront pas être générées ni évaluées. Il peut dont être intéressant de prévoir plus d'opérateurs que nécessaire dans l'ensemble *O*.
- pour chaque fonction candidate c générée, l'évaluation 2341 de la fonction candidate comprend l'application de la fonction candidate au jeu de données de recherche et la détermination du score d'ajustement Sc à ce jeu de données de recherche, comme précédemment décrit. En relation avec la FIG. 4a, les fonctions candidates sont appliquées au jeu de données de recherche JDR. Leurs images c1(x), c2(x), c3(x) et c4(x) qui prennent leurs valeurs dans R sont transformées par la fonction de transformation T qui selon l'invention fournit directement un résultat transformé appartenant à {0,1}. Par exemple, la fonction de transformation T choisie est la fonction puits Pt telle qu'illustrée par la FIG. 4c. Un avantage de cette fonction puits est qu'elle permet d'obtenir directement et simplement un résultat dans {0, 1}, c'est-à-dire respectivement à la première classe CL1 et à la deuxième classe CL2 {CL1,CL2}.
- la sélection 2342 d'au moins une meilleure fonction candidate C parmi la pluralité de fonctions candidates c générée à l'aide du score d'ajustement, ladite au moins une fonction candidate C générée étant associée audit au moins un meilleur score d'ajustement selon un critère donné, et
- La mutation 2343 de la au moins une fonction candidate C sélectionnée, une ou plusieurs fonctions candidates mutées Cm étant obtenues.

Selon un exemple de réalisation de l'invention, cette succession de sous-étapes est itérée pour les fonctions candidates mutées Cm, tant qu'au moins un critère d'arrêt n'est pas satisfait en 2134.

Selon un exemple de réalisation de l'invention, on applique les critères d'arrêt suivants :
- le score d'ajustement Sc est constant depuis un nombre d'itérations donné, par exemple égal à 4,
- un nombre maximal d'itérations des étapes 2341 à 2343 a déjà été effectué,

Un avantage est de réaliser un bon compromis entre coût et efficacité.

A l'issue de cette étape 234, on vérifie un deuxième critère de division du nœud courant. Il s'agit d'un critère de performance de classification de la fonction de classification f produite par l'étape de recherche 234.

Pour ce faire, on réalise en 235 le test suivant :
- on vérifie que la fonction de classification f trouvée classe correctement les paires du jeu de données de recherche JDR sur lequel elle a été recherchée. Par exemple, on considère que cette condition est satisfaite dès lors que 90% des paires sont bien classées (les paires avec l'étiquette LBL_N dans la classe CL1 et les autres dans la classe CL2),
- on applique la fonction de classification f au jeu de données courant JDC et on vérifie qu'elle classe correctement les paires comprenant l'étiquette LBL_N. Par exemple, on considère que cette deuxième condition est satisfaite dès lors que 95% des paires comprenant l'étiquette LBL_N sont classées dans la classe nominale CL1.

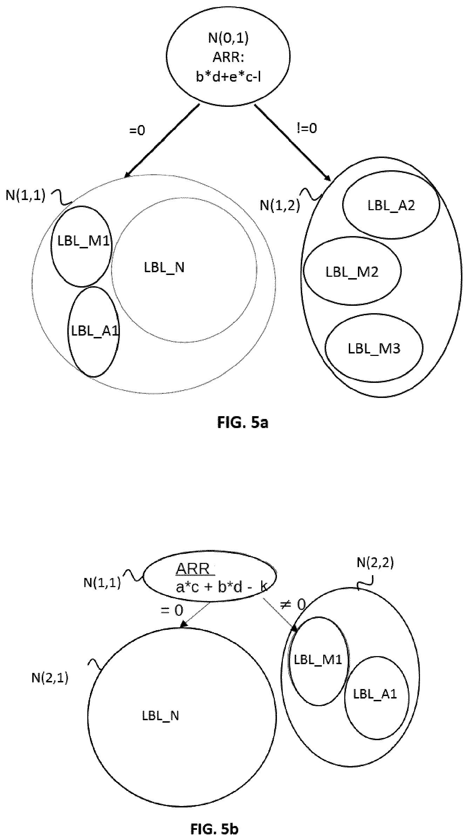

Si le test de performance de classification est réussi, on considère que la fonction de classification f constitue une relation de redondance analytique permettant de discriminer le type de panne correspondant à la deuxième étiquette LBL_M2 des autres types de panne. On dit aussi que le nœud courant est associé à un indicateur de la panne du composant M2. Selon l'exemple illustratif de la FIG. 5a, le test est effectivement un succès et l'ARR obtenue pour le nœud N(0,1) est la suivante : b*d+e*c-l.

Si, au contraire, une des deux conditions n'est pas satisfaite, alors la fonction de classification f trouvée n'est pas considérée comme suffisamment performante pour réaliser une ARR. Dans ce cas, on retourne à l'étape 232 de sélection d'une nouvelle paire d'étiquettes. On vérifie s'il reste des paires d'étiquettes représentées dans le jeu de données courant JDC qui n'ont pas encore été testées.

A cet égard, il convient de noter que selon un mode de réalisation de l'invention, on distingue le cas où l'étiquette LBL_N est représentée dans le jeu de données courant de celui où elle n'est plus représentée. Le dernier cas sera détaillé ci-après en relation avec le traitement du nœud N(2,2).

En 236, on divise le nœud courant N(1,1) par application de la fonction de classification f aux paires du jeu de données courant JDC et on obtient deux sous-jeux de données :
- un premier sous-jeu SJ11 comprenant toutes les paires auxquelles la fonction de classification f associe la classe nominale CL1. Au vu du test de performance précédent, on sait qu'il comprend sensiblement toutes les paires du jeu de données courant JDC qui comprennent l'étiquette de fonctionnement nominal LBL_N, mais il peut en comprendre d'autres. Autrement dit, il s'agit de toutes les paires du jeu de données d'entraînement JDE comprenant une étiquette de panne à laquelle l'ARR f trouvée pour le nœud N(0,1) n'est pas sensible. Selon l'exemple de la FIG. 5a, il s'agit des paires comprenant l'étiquette LBL_A1 ou LBL_M1.
- un deuxième sous-jeu SJ12 comprend toutes les paires classées par la fonction de classification f dans la classe de panne CL2. Du fait du test de performance précédent, on sait qu'il comprend sensiblement toutes les paires du jeu de recherche JDR comprenant la deuxième étiquette LBL_M2, mais il peut aussi comprendre des paires associées à une ou plusieurs autres étiquettes de panne. Dans ce cas, on dit que l'ARR f est sensible à d'autres étiquettes que celle correspondant à l'indicateur du nœud courant. Autrement dit, le nœud courant Nc ne permet pas d'isoler une panne donnée. Dans l'exemple de la FIG. 5a, pour le nœud racine, il s'agit des paires comprenant les étiquettes LBL_M2, LBL_M3 ou LBL_A2.

On crée deux nœuds fils N(1,1) et N(1,2) du nœud courant Nc, à un niveau inférieur de celui du nœud courant Nc, comme illustré par la FIG. 3a (LV1) et on propage respectivement le premier sous jeu de données SJ11 vers le premier nœud fils N(1,1) et le deuxième sous-jeu de données SJ12 vers le deuxième nœud fils N(1,2).

Le traitement du nœud courant Nc étant terminé, on retourne à l'étape 22 pour sélectionner un nouveau nœud courant Nc. Il s'agit d'un nœud suivant parmi les nœuds déjà créées de l'arbre de décision T et pas encore traités, selon un ordre de parcours donné de l'arbre. Par exemple, on parcourt l'arbre de haut en bas, et pour un niveau donné, de gauche à droite. Dans l'exemple de la figure 3a, on vient de terminer le traitement du nœud racine N(0,1) au niveau LV0, on descend au niveau LV1 et on choisit le premier nœud fils N(1,1).

En 23, on traite le nœud fils N(1,1) comme décrit précédemment pour le nœud racine N(0,1). Il est associé au jeu de données courant JDC qui correspond au sous-jeu de données SJ11.

En 231, on vérifie qu'il n'est pas pur. En l'espèce, c'est bien le cas puisque le jeu de données courant JDC du nœud courant N(1,1) comprend bien les 11818 paires comprenant l'étiquette de fonctionnement nominal LBL_N, mais aussi 2312 paires comprenant l'étiquette de panne LBL_M1 et 2354 paires comprenant l'étiquette LBL_A1.

En 232, on sélectionne une paire d'étiquettes. De nouveau, l'étiquette LBL_N est représentée dans le jeu de données courant. Dans cet exemple, on choisit la paire d'étiquettes (LBL_N,LBL_M1).

En 233, on construit un jeu de données de recherche JDR adapté. Par exemple, il est formé des 2312 paires comprenant l'étiquette LBL_M1 et de 2312 paires comprenant l'étiquette LBL_N, comme précédemment décrit.

En 234, on cherche une fonction de classification f à partir du jeu de recherche JDR ainsi obtenu.

En 235, on réalise le test de performance de classification et on vérifie que la fonction de classification f trouvée est bien une ARR. Dans l'exemple de la FIG. 5b, l'ARR f vaut : a*c+b*d-k.

En 236, on divise le nœud courant N(1,1) en deux nœuds fils N(2,1) et N(2,2) et on leur propage les sous-jeux de données obtenus par l'application de la fonction de classification f comme précédemment décrit pour le nœud racine N(0,1). Les paires du jeu de données courant JDC comprenant une étiquette à laquelle la fonction f est sensible (LBL_M1 et LBL_A1) sont propagées vers le deuxième nœud fils N(2,2) tandis que les autres (LBL_N) sont propagées vers le premier nœud fil N(2,1).

On continue ainsi, tant qu'il reste des nœuds à traiter. En l'espèce, on traite le nœud N(1,2), puis les nœuds N(2,1) à N(2,4).

Concernant les nœuds N(2,1) et N(2,4), on constate, comme illustré par le tableau de la FIG. 3C, qu'il sont purs, du fait que toutes les paires de leur jeu de données comprennent la même étiquette (LBL_N pour le nœud N(2,1) et LBL_M2 pour le nœud N(2,4). Aucun des deux ne passe le test 231, donc ils ne sont pas divisés. Autrement dit, ce sont des nœuds feuilles qui réalisent chacun le diagnostic de l'étiquette présente dans leur jeu de données associé.

Concernant les nœuds N(2,2) et N(2,3), ils ne sont pas purs. On leur applique donc les étapes 232-236.

En ce qui concerne le jeu de données du nœud N(2,2), deux étiquettes distinctes sont représentées dans son jeu de données, mais il s'agit de deux étiquettes de panne (LBL_A1 et LBL_M1).

Selon un mode de réalisation de l'invention, on sélectionne la paire d'étiquettes (LBL_A1, LBL_M1) en 232 et on construit le jeu de données de recherche JDR de la façon suivante :
- On détermine l'étiquette la plus représentée en nombre dans le jeu de données courant du nœud courant. En l'espèce, le jeu de données SJ22 associé au nœud N(2,2) comprend 2312 paires comprenant l'étiquette LBL_M1 et 2354 paires comprenant l'étiquette LBL_A1, comme indiqué en 5^{ème} ligne du tableau de la FIG. 3c,
- On sélectionne, par exemple aléatoirement, un premier sous-ensemble des paires comprenant l'étiquette LBL_A1. Par exemple, ce premier sous-ensemble comprend 2312/2 paires soit la moitié du nombre des paires associées à l'étiquette LBL_M1. On obtient par ailleurs un deuxième sous-ensemble comprenant autant (soit 2312/2 paires) comprenant l'étiquette LBL_N, par exemple dans une mémoire, telle que la mémoire MEM1. Enfin, on forme le jeu de recherche JDR en réunissant le premier sous-ensemble, le deuxième sous-ensemble et les 2312 paires comprenant la deuxième étiquette LBL_M1.

Un avantage d'ajouter des paires comprenant l'étiquette LBL_N est de permettre la recherche d'une ARR qui est sensible à la panne du composant A1, mais n'est pas sensible à celle du composant M1, ni à l'état de fonctionnement nominal.

On comprend qu'ici la paire d'étiquettes de panne sélectionnée en 232 est ordonnée et que le jeu de données de recherche associé à cette paire (LBL_A1, LBL_M1) à utiliser pour rechercher une fonction de classification ARR, n'est pas déterminé en 233 de la même façon que celui associé à la paire (LBL_M1, LBL_A1). Cela signifie qu'il convient de tester toutes les permutations possibles des étiquettes de panne présentes dans le jeu de données courant, soit pour un nombre entier L non nul, d'étiquettes de panne distinctes, L*(L-1) paires d'étiquettes.

En 234, on recherche une fonction de classification f, mais elle ne réussit pas le test de performance de classification en 235. L'enchaînement d'étapes 232-235 est répété en permutant les étiquettes LBL_A1 et LBL_M1 (donc sur la paire (LBL_M1, LBL_A1)), mais la fonction de classification qui en découle ne passe pas non plus le test.

Du fait qu'il ne reste plus de paires d'étiquettes à tester, le traitement s'arrête pour le nœud N(2,2) qui ne sera donc pas divisé. C'est un nœud feuille qu'on associe aux types de pannes correspondant aux étiquettes LBL_A1 et LBL_M1 qu'elle ne sait pas discriminer entre eux.

Le même enchaînement d'étapes s'applique au nœud N(2,3), qui ne sera pas divisé lui non plus bien qu'il ne soit pas pur. C'est un nœud feuille qu'on associe aux types de pannes correspondant aux étiquettes LBL_M3et LBL_A2 qu'elle ne sait pas discriminer entre eux. Selon un exemple particulier non limitatif de réalisation de l'invention, on associe à ce nœud N(2,3) l'étiquette la plus représentée dans son jeu de données courant. De la sorte, on indique que ce nœud feuille réalise le diagnostic de l'état de fonctionnement correspondant à cette étiquette. Dans l'exemple considéré, il s'agit de l'étiquette LBL_M3 représentative de l'état de panne du composant M3.

Une fois que tous les nœuds ont été traités, la construction de l'arbre de décision T est terminée. Il est mis à disposition en 24. Par exemple, il est stocké en mémoire et/ou il est transmis à un équipement distant via des moyens de communications.

Selon un exemple de réalisation de l'invention, le procédé de construction d'un arbre de décision pour le diagnostic d'un système comprenant plusieurs composants est mis en œuvre sous forme algorithmique. Il s'appuie par exemple sur un paquetage python tel que celui documenté dans le document disponible sur le lien https://gplearn.readthedocs.io/en/stable/intro.html. Un tel paquetage permet notamment de mettre en œuvre un algorithme de régression symbolique, configurable à l'aide de paramètres, relatifs par exemple à une fréquence de mutation des fonctions candidates, ou une vraisemblance de chaque type de mutation autorisé, un nombre de fonctions candidates générées à chaque itération, le score d'ajustement, des conditions d'arrêt.

On se réfère maintenant à un exemple de « pseudo-code » d'un tel algorithme du procédé de constructions d'un arbre de décision selon un mode de réalisation de l'invention, fourni en annexe.

Dans cette annexe, le symbole de flèche avec un plus (← +) signifie que la valeur est jointe à la variable. Tous les mots-clés utilisés sont expliqués ci-dessous :
EMPTY : vide, caractérise une liste qui ne contient aucun élément.
PURE : pur, signifie qu'au moins X % des données (paires) présentes dans un nœud donné sont de la même classe. La valeur de X est un paramètre de l'algorithme. Par défaut, sa valeur est de 95 %. « PURE with label » signifie que le nœud en question ne contient que des paires comprenant une même étiquette.
LEAVE : feuille, désigne un nœud qui n'a pas d'enfant, c'est-à-dire qui n'a pas été divisé. Lorsque l'on utilise l'arbre de décision construit comme outil de décision pour le diagnostic, les données du vecteur de données qui atteint un tel nœud feuille seront prédites ou diagnostiquées comme représentatives de l'état de fonctionnement du système correspondant à l'étiquette de ce nœud (notée *node.label* dans le pseudo-code).
GENERATE : s'applique à un nœud qui n'est pas pur. Ainsi, le but est de trouver une nouvelle ARR qui divise les données présentes dans ce nœud. Étant donné que la classification symbolique ne permet de classer qu'entre deux classes, l'ARR est recherchée à partir d'un jeu de données de recherche comprenant des paires (vecteur, étiquette), représentatives des types de pannes que nous voulons que ce nœud discrimine.

On distingue deux cas :
1. Si les paires qui ont été propagées jusqu'à ce nœud comprennent encore une quantité représentative d'étiquettes représentatives d'un état nominal, le jeu de données de recherche est construit, comme décrit précédemment en relation avec la FIG. 2, avec toutes les paires comprenant l'étiquette d'état nominal (représentative de la classe nominale CL1) et des paires comprenant n'importe laquelle des étiquettes de classe de panne présentes en quantité représentative au niveau du nœud (représentatives de la classe de panne CL2). Par exemple, on considère qu'une étiquette de classe est présente en quantité représentative, ou représentée, dès lors que le jeu de données courant comprend Z% d'un nombre total de paires comprenant cette étiquette dans le jeu de données d'entraînement initial JDE avec Z égal à au moins 5 par défaut.
2. Si aucune paire comprenant l'étiquette représentative d'un fonctionnement nominal n'est présente (ou présente de manière représentative), on détermine la ou les étiquettes de panne qui sont présentes de manière représentative. Ensuite, on réalise toutes les permutations de paires de ces étiquettes de panne. Cela signifie que pour L paires d'étiquettes comprenant une étiquette de panne, on obtient*x* L(L - 1) paires destinées à constituer le jeu de données de recherche pour le nœud courant. Cela signifie également que si la paire (défaut a, défaut b) est présente, la paire (défaut b, défaut a) sera également présente. Ceci est important pour la raison suivante : la première classe de la paire est alors modifiée par exemple de telle sorte que lors de l'équilibrage des paires (voir BALANCE plus avant), la moitié des données de la première classe est constituée de paires de la classe elle-même, tandis que la moitié des paires de la seconde classe est constituée de paires de la classe elle-même, et l'autre moitié est constituée de paires associées à la classe nominale (sélectionnées aléatoirement dans le jeu de données initialement propagé dans le nœud). Ceci permet à la méthode de classification symbolique de trouver une expression qui vaut 0 pour les paires associées à la classe nominale et qui ne vaut pas 0 pour les paires associées à la première classe. En d'autres termes, il s'agit de trouver une équation ou expression ARR qui est sensible à la seconde classe CL2 mais pas à la première CL1.

FoundExpression : Trouvé Expression comprend le résultat de l'exécution d'une fonction de classification symbolique du paquetage, donc une fonction f.

CHECK : vérifie, signifie que *foundExpression* est testé pour vérifier s'il s'agit ou non d'une ARR. En d'autres termes, CHECK réalise le test de performance de classification décrit plus avant. Pour ce faire, il faut satisfaire les deux conditions précédemment énoncées. Si l'une d'elles n'est pas vérifiée , *foundExpression* n'est pas considérée comme un ARR valide et la boucle « while » continue.

REMAINS : reste, vérifie que toutes les paires d'étiquettes n'ont pas été testées. Si c'est le cas, on sort de la boucle While et *foundExpression* n'existe pas. Le nœud courant n'a pas d'ARR associée, il ne sera pas divisé.

BALANCE : équilibre, il s'agit d'une étape de prétraitement qui vérifie quelle étiquette est la moins représentées parmi les paires (vecteur, étiquette) présentes dans le jeu de données courant du nœud et sélectionne aléatoirement autant de paires de la classe la plus représentée. Cette opération est effectuée de manière à ce que la recherche d'une fonction de classification par classification symbolique de la ligne suivante soit effectuée sur la base d'un jeu de données équilibré.

EXISTS : existe, si la boucle « while » est quittée parce qu'un test CHECK *foundExpression* a été valablement passé, alors *foundExpression* existe. On a trouvé une ARR, le nœud courant va être divisé en 236.

SPLIT : divise, cette fonction applique l'ARR *foundExpression* sur les paires du sous-jeu de données présents dans le nœud. Si le résultat est 0 pour une paire, elle est propagée au niveau inférieur de l'arbre de décision vers le nœud fils gauche du nœud courant. Si le résultat est différent de 0, elle est envoyée vers le nœud fils de droite.

MAJOR : majeure, désigne l'étiquette la plus représentée dans les paires qui ont atteint le nœud courant. Elle est sélectionnée comme étiquette majeure.

Le procédé qui vient d'être décrit produit un arbre de décision T destiné à être utilisé pour prédire les états de fonctionnement du système en fonction des données de mesure qui lui sont fournies en entrée (dans un vecteur de variables observables de même format que celui utilisé pour l'entraînement/construction de l'arbre de décision).

Selon un exemple de réalisation, l'arbre de décision T est testé à l'aide du jeu de données de test JDT. Lors de ce test, on présente en entrée de l'arbre de décision T successivement chacune des paires (vecteur, étiquette) du jeu de test JDT. Pour chaque paire, on fait parcourir l'arbre de décision T jusqu'à ce qu'il arrive dans un nœud feuille. On regarde l'étiquette associée à ce nœud feuille et on la compare à celle de de la paire présentée en entrée. On compte ensuite combien de paires ont été bien prédites et on obtient un score. Si le score est supérieur à un seuil donné, on considère que l'arbre de décision T est apte à être exploité pour diagnostiquer le système S. Sinon, on peut recommencer la construction par exemple à l'aide d'un jeu de données d'entraînement plus étendu et d'autres paramètres (choix des opérateurs pour rechercher les fonctions de classification par exemple).

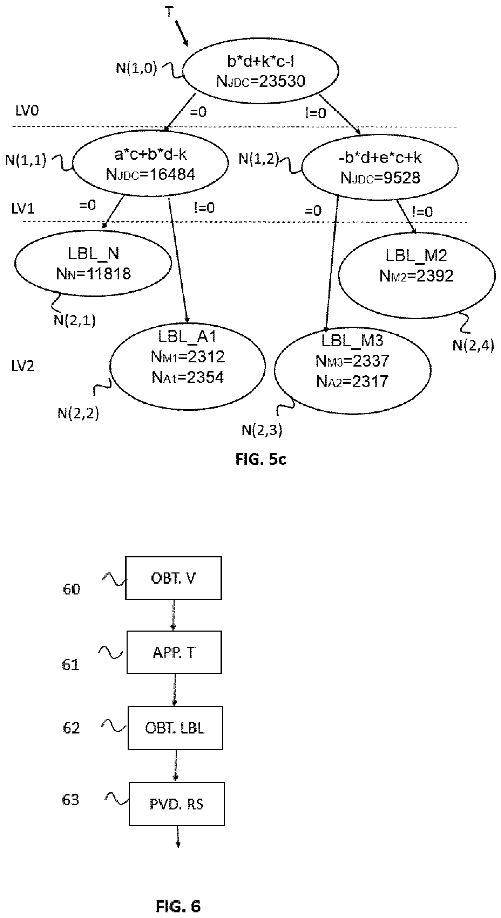

En relation avec la FIG. 6, on décrit maintenant les étapes d'un procédé de diagnostic d'un état du système S selon un exemple de réalisation de l'invention. Ce procédé est par exemple mis en œuvre par un dispositif 200 qui sera décrit plus avant. Ce dispositif 200 est configuré pour accéder à l'arbre de décision T construit et mis à disposition par le dispositif 100.

En 60, on obtient un vecteur de données de mesure des variables observables présentant un même format que les vecteurs utilisés pour construire l'arbre de décision T. Elles ont par exemple été mesurées et transmises par des capteurs tels que les capteurs CT1, CT2, ...CT7 de la FIG. 1b. A titre d'exemple illustratif, on considère l'arbre de décision T de la FIG. 5C.

En 61, on exécute l'arbre de décision T pour le vecteur de données V obtenu. Le vecteur V est présenté au nœud racine N(0, 1) au niveau duquel l'équation ARR associée à ce nœud (b*d+e*c-g) lui est appliquée. La décision de propager le vecteur V vers l'une ou l'autre branche du niveau inférieur LVL1 est basée sur la vérification ou non par le vecteur de données de cette équation. Si l'équation est vraie pour le vecteur de données V, il est envoyé sur la branche de gauche vers le nœud N(1,1), sinon il est envoyé sur la branche de droite vers le nœud N(1,2). On suppose ici à titre d'exemple qu'elle n'est pas vérifiée. Le vecteur V est donc envoyé dans le nœud N(1,2). Le nœud N(1, 2) est associée à l'équation ARR : a*c+b*d-k. De la même manière, il est envoyé vers le niveau inférieur LV2 de l'arbre en fonction du résultat obtenu. On suppose ici que l'ARR du nœud N(1, 2) n'est pas vérifiée par le vecteur V. Il est donc propagé jusqu'au nœud N(2,4) qui est un nœud feuille.

Un tel nœud feuille réalise le diagnostic d'un ou plusieurs composants du système, idéalement d'un seul. Il est associé à une classe d'état comprenant la classe nominale CL1 ou la classe de panne CL2. Les informations relatives au composant associé au nœud et à la classe d'état forment le résultat de diagnostic RS porté par le nœud feuille. Dans l'exemple de la FIG. 5c, le nœud feuille N(2,4) réalise le diagnostic du composant M2 et indique par la classe CL2 qu'il se trouve dans un état de panne.

Comme précédemment évoqué, il est possible que la construction de l'arbre de décision s'arrête avant d'avoir abouti à des nœuds feuilles qui soient tous purs, c'est-à-dire qui soient capables chacun d'isoler la panne d'un composant particulier du système S. Cet arrêt prématuré est à imputer au jeu de données d'entraînement, et en particulier sur les variables observables utilisées, qui ne permettent pas d'établir les relations de redondance analytiques requises pour discriminer les pannes de chacun des composants. En relation avec la FIG. 5c, c'est par exemple le cas pour les nœuds feuilles N(2,2) et N(2,3). Le nœud N(2,2) est prévu pour réaliser le diagnostic du composant M1, mais en réalité, il n'a pas été possible de trouver une ARR lui permettant d'isoler les pannes de ce composant, si bien qu'il n'est pas capable de dissocier les pannes du composant M1 de celles du composant A1. De même, le nœud N(2,3) est prévu pour réaliser le diagnostic du composant M3, mais en réalité, il n'est pas capable de dissocier les pannes du composant M3 de celles du composant A2.

Concernant le système S de la FIG. 1b, on comprend qu'une des raisons possibles de cet échec pourrait être l'absence de capteurs pour relever des données de mesure des variables t, u, w qui constituent à la fois des sorties des composants M1, M2 et M3 et des entrées des composants A1 et A2.

Les fonctions, étapes et procédés décrits dans ce document peuvent être mises en œuvre par logiciel (par exemple, via un logiciel sur un ou plusieurs processeurs, pour exécution sur un ordinateur à usage général ou à usage spécifique) et/ou être mises en œuvre par du hardware (par exemple un ou plusieurs circuits électroniques, et/ou tout autre composant matériel).

La présente description concerne ainsi un logiciel ou programme d'ordinateur, susceptible d'être exécuté par un dispositif hôte (par exemple, l'un des dispositifs 100 et 200) au moyen d'un ou plusieurs processeurs de données, ce logiciel / programme comportant des instructions pour causer l'exécution par ce dispositif hôte de tout ou partie des étapes de l'un ou des procédés décrits dans ce document. Ces instructions sont destinées à être stockées dans une mémoire du dispositif hôte, chargées puis exécutées par un ou plusieurs processeurs de ce dispositif hôte de sorte à causer l'exécution par ce dispositif hôte du procédé.

Ce logiciel / programme peut être codé au moyen de n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif hôte peut être mis en œuvre par une ou plusieurs machines physiquement distinctes. Le dispositif hôte peut présenter globalement l'architecture d'un ordinateur, incluant des constituants d'une telle architecture : mémoire(s) de données, processeur(s), bus de communication, interface(s) matérielle(s) pour la connexion de ce dispositif hôte à un réseau ou un autre équipement, interface(s) utilisateur, etc.

Dans un mode de réalisation, tout ou partie des étapes du procédé de programmation ou d'un autre procédé décrit dans ce document sont mises en œuvre par un dispositif de programmation doté de moyens de mise en œuvre de ces étapes de ce procédé.

Ces moyens peuvent comprendre des moyens logiciels (software) (par exemple, des instructions d'un ou plusieurs composants d'un programme) et/ou moyens matériels (hardware) (par exemple, mémoire(s) de données, processeur(s), bus de communication, interface(s) matérielle(s), etc).

Ces moyens peuvent comprendre par exemple un ou plusieurs circuits configurés pour exécuter une ou plusieurs ou toutes les étapes d'un des procédés décrits ici. Ces moyens peuvent comprendre par exemple au moins un processeur et au moins une mémoire comprenant des instructions de programme configurées pour, lorsqu'elles sont exécutées par le processeur, causer l'exécution par le dispositif d'une ou plusieurs ou toutes les étapes d'un des procédés décrits ici.

La figure 7 illustre un exemple de réalisation d'un dispositif 100 de construction d'un arbre de décision pour le diagnostic d'un système comprenant plusieurs composants ou d'un dispositif 200 de diagnostic d'un système comprenant plusieurs composant selon l'invention. Dans cet exemple, le dispositif 100, 200 est configuré pour mettre en œuvre toutes les étapes du procédé de construction d'un arbre de décision, respectivement de diagnostic d'un système décrit dans le présent document. En variante, il pourrait aussi mettre en œuvre une partie seulement de ces étapes.

En relation avec la FIG. 7, le dispositif 100, 200 comprend au moins un processeur 110, 210 et au moins une mémoire 120, 220. Le dispositif 100, 200 peut aussi comprendre une ou plusieurs interfaces de communication. Dans cet exemple, le dispositif 100, 200 comprend des interfaces réseau 130, 230 (par exemple, des interfaces réseau pour l'accès à un réseau câblé / sans fil, y compris une interface Ethernet, une interface WIFI, etc.) connectées au processeur 110, 210 et configurées pour communiquer via un ou plusieurs liens de communication câblés / non câblés et des interfaces utilisateur 140, 240 (par exemple, un clavier, une souris, un écran d'affichage, etc) connectées au processeur. Le dispositif 100, 200 peut également comprendre un ou plusieurs lecteurs de support 150, 250 pour lire un support de stockage lisible par ordinateur (par exemple, un disque de stockage numérique (CD-ROM, DVD, Blue Ray, etc.), une clé USB, etc). Le processeur 110, 210 est connecté à chacun des autres composants précités afin d'en commander le fonctionnement.

La mémoire 120, 220 peut comprendre une mémoire vive (RAM), une mémoire cache, une mémoire non volatile, une mémoire de sauvegarde (par exemple, des mémoires programmables ou flash), une mémoire morte (ROM), un disque dur (HDD), un lecteur à état solide (SSD) ou toute combinaison de ceux-ci. La ROM de la mémoire 120, 220 peut être configurée pour stocker, entre autres, un système d'exploitation du dispositif 100, 200 et/ou un ou plusieurs codes de programmes informatiques d'une ou plusieurs applications logicielles. La RAM de la mémoire 120, 220 peut être utilisée par le processeur 110, 210 pour le stockage temporaire de données.

Le processeur 110, 210 peut être configuré pour stocker, lire, charger, exécuter et/ou traiter autrement des instructions stockées dans un support de stockage lisible par ordinateur et/ou dans la mémoire 120, 220 de sorte que, lorsque les instructions sont exécutées par le processeur, le dispositif 100, 200 exécute une ou plusieurs ou toutes les étapes du procédé de construction, respectivement de diagnostic, décrit dans le présent document. Des moyens mettant en œuvre une fonction ou un ensemble de fonctions peuvent correspondre dans ce document à un composant logiciel, à un composant matériel ou bien à une combinaison de composants matériels et/ou logiciels, apte à mettre en œuvre la fonction ou l'ensemble de fonctions, selon ce qui est décrit ci-dessous pour les moyens concernés.

La présente description concerne aussi un support d'informations lisible par un processeur de données, et comportant des instructions d'un programme tel que mentionné ci-dessus.

Le support d'informations peut être n'importe quel moyen matériel, entité ou appareil, capable de stocker les instructions d'un programme tel que mentionné ci-dessus. Les supports de stockage de programme utilisables incluent les mémoires ROM ou RAM, les supports de stockage magnétiques tels que des disques magnétiques et des bandes magnétiques, les disques durs ou des supports de stockage de données numériques à lecture optique, ou toute combinaison de ces supports. Dans certains cas, le support de stockage lisible par ordinateur n'est pas transitoire. Dans d'autres cas, le support d'informations peut être un support transitoire (par exemple, une onde porteuse) pour la transmission d'un signal (signal électromagnétique, électrique, radio ou optique) porteur des instructions de programme. Ce signal peut être acheminé via un moyen de transmission approprié, filaire ou non filaire : câble électrique ou optique, liaison radio ou infrarouge, ou par d'autres moyens.

L'invention qui vient d'être présentée peut s'appliquer à n'importe quel système industriel statique complexe, pourvu qu'on dispose de données de mesure de variables observables représentatives d'un état de fonctionnement des composants qui le constituent. En relation avec la FIG. 8, on décrit maintenant à titre d'exemple illustratif un système S' comprenant deux réservoirs d'eau T1 et T2 liés par une valve Vb. Une valve Vo contrôle la sortie du réservoir T2. Les deux valves peuvent être dans l'état ouvert ou fermé. Le réservoir T1 est alimenté par une pompe P1 pouvant fournir de l'eau avec un débit Qp. Cette pompe est régulée par un contrôleur PI.

Un objectif de ce système est de maintenir un débit en sortie Qo constant. Toute divergence par rapport à cet objectif est considérée comme un état de fonctionnement défectueux, ou faute/panne.

Dans cet exemple, on considère les variables observables suivantes (certaines sont représentées sur la FIG. 8, d'autres non): mP1 pression mesurée dans le réservoir 1, mP2 pression mesurée dans le réservoir 2, my1 hauteur d'eau du réservoir T1, my2 hauteur d'eau du réservoir T2, mUp signal en sortie du contrôleur PI, mUo position de la valve Vo, mUb position de la valve Vb, mQp débit en sortie de la pompe P1, mQo débit en sortie du système S'.

On distingue 13 états de fonctionnement des différents composants du système S' : état de fonctionnement nominal, état de panne du contrôleur PI , état de panne de la pompe P1, état de panne du capteur mUb de position de la valve Vv, état de panne du capteur my1, état de panne du capteur my2, état de fuite dans le réservoir T1 (concerne les variables observables my1, mP1. Sur la FIG. 8, on a indiqué un débit de fuite Qf1), état de fuite dans le réservoirT2 (concerne les variables observables my2, mP2. Sur la FIG. 8, on a indiqué un débit de fuite Qf2), état de niveau d'eau anormal dans le réservoir T2, état de valve Vb fermée et état de valve Vb ouverte.

Il en résulte que le jeu de données d'entrainement comprend un vecteur formé des variables observables précédentes et d'une étiquette parmi les étiquettes d'états de fonctionnement qui viennent d'être énoncées. Pour la mise en œuvre du procédé de construction d'un arbre de décision, on constitue un ensemble d'opérateurs O comprenant par exemple les opérateurs suivants : +, *, -, /, sqrt, abs, sign, cos, sin.

On comprend que l'ensemble d'opérateurs O peut être défini de diverses manières, par exemple par un utilisateur du système qui a une certaine intuition de son fonctionnement. En l'espèce, il fait l'hypothèse qu'il va y avoir des relations avec des carrés d'où le choix de l'opérateur racine. En revanche, il suppose qu'il n'y a pas de relation trigonométrique dans le système donc il ne choisit pas les opérateurs cos et sin.

Bien sûr l'invention s'applique à d'autres systèmes, par exemple à un bâtiment dont on veut diagnostiquer l'état de solidité afin d'évaluer un risque d'effondrement. Un objectif à atteindre pourrait être de conserver une hauteur fixe ou un angle de 90° entre chacun de ses murs et le sol. Les variables seraient les grandeurs physiques qui régissent la position des murs, plafonds, etc. et le diagnostic est un état du bâtiment parmi plusieurs états de solidités donnés.

### ANNEXE

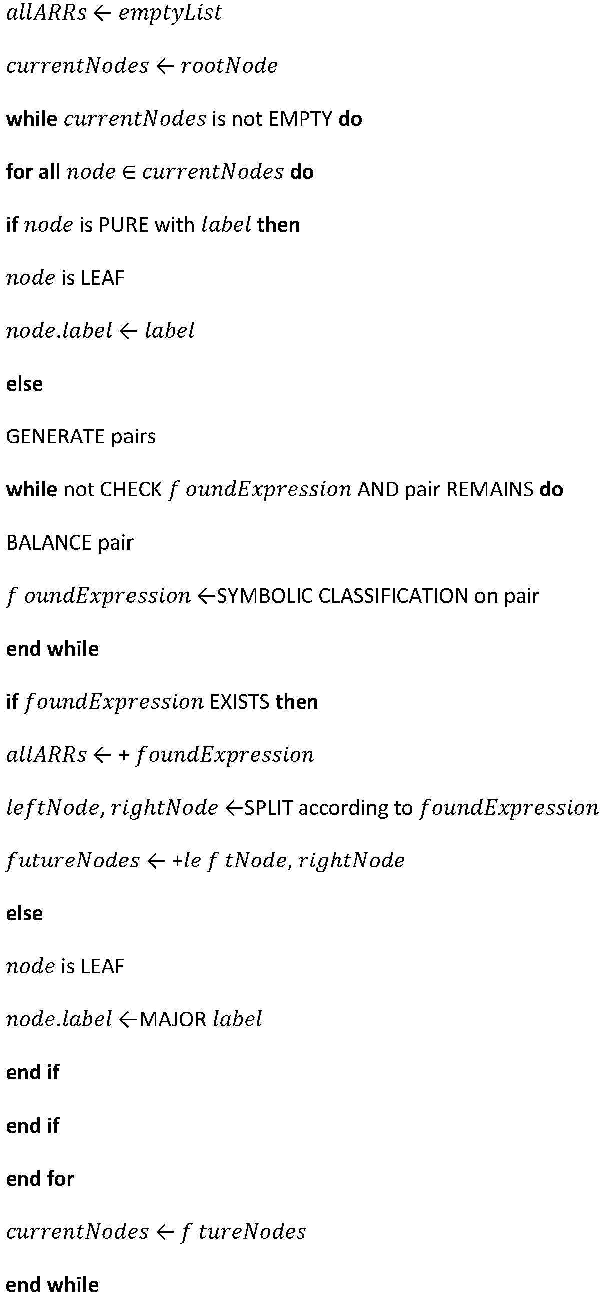

## Revendications

1. Procédé de construction d'un arbre de décision pour le diagnostic d'un système comprenant une pluralité de composants (C1, C2, ..., C_{N}), ledit procédé comprenant :
- l'obtention (20) d'un jeu de données d'entraînement (JDE), le procédé étant **caractérisé en ce que** le jeu de données d'entraînement comprend des paires, unedite paire comprenant un vecteur de valeurs mesurées de variables observables représentatives d'un fonctionnement du système et une étiquette associée (f(x1,x2,...,xM)), l'étiquette appartenant à un groupe d'étiquettes comprenant une étiquette représentative d'un état de fonctionnement nominal dudit système et des étiquettes représentatives chacune d'un état de panne dudit système, chaque état de panne étant associé à au moins un composant dudit système,
- le traitement (23) d'un nœud courant de l'arbre de décision associé à un sous-ensemble du jeu de données d'entraînement, dit jeu de données courant, issu du jeu de données d'entraînement, ledit traitement comprenant, lorsqu'au moins un critère de division est satisfait, la division (236) du nœud courant en un premier et un deuxième nœuds fils par application d'une fonction de classification obtenue à partir du jeu de données courant et définie pour associer à plusieurs desdites variables observables, une première classe, dite classe nominale, représentative de l'état de fonctionnement nominal du système ou une deuxième classe, dite classe de panne, représentative desdits états de panne dudit système, et classer les paires du sous-jeu de données courant comprenant une première étiquette du groupe d'étiquettes dans la classe nominale et les paires du sous-jeu de données comprenant une deuxième étiquette du groupe d'étiquettes dans la classe de panne, et la propagation desdites paires classées dans la classe nominale dans un premier sous-jeu de données du premier nœud fils et desdites paires classées dans la classe de panne dans un deuxième sous-jeu de données du deuxième nœud fils, et
- la mise à disposition (24) de l'arbre de décision pour le diagnostic du système.

2. Procédé de construction d'un arbre de décision selon la revendication précédente, **caractérisé en ce que** ledit critère de division comprend un critère d'impureté et ledit procédé comprend la vérification (231) du critère d'impureté, comprenant la détermination d'un ratio entre un nombre de paires du jeu de données courant associé à une étiquette donnée du groupe d'étiquettes et un nombre total de paires dudit jeu de données courant, le critère d'impureté étant vérifié lorsque le ratio est inférieur à un seuil de pureté donné.

3. Procédé de construction d'un arbre de décision selon la revendication précédente, **caractérisé en ce que** le traitement du nœud courant comprend, lorsque le critère d'impureté est satisfait :
- la sélection (232) de la première et de la deuxième étiquettes du groupe d'étiquettes, dite paire d'étiquettes, les première et deuxième étiquettes étant distinctes et représentées dans les paires du jeu de données courant,
- la détermination (233) d'un jeu de données de recherche (JDR) au moins à l'aide d'une partie du jeu de données courant et en fonction de la paire d'étiquettes sélectionnée, et
- la recherche (234) de la fonction de classification par classification symbolique à partir d'un ensemble donné d'opérateurs et des paires du jeu de données de recherche.

4. Procédé de construction d'un arbre de décision selon l'une des revendications précédentes **caractérisé en ce que** ledit au moins un critère de division comprend un critère de performance de classification de la fonction de classification obtenue, et **en ce que** le procédé comprend, préalablement à la division (236) , la vérification (235) dudit critère de performance, comprenant la détermination d'un premier ratio entre un nombre de paires du jeu de données courant comprenant l'étiquette représentative d'un état de fonctionnement nominal classées par la fonction de classification dans la classe nominale sur un nombre total de paires du jeu de données courant comprenant ladite étiquette, la détermination d'un deuxième ratio entre un nombre de paires du jeu de données de recherche classées par la fonction de classification dans la classe parmi la classe nominale et la classe de panne qui correspond à leur étiquette et un nombre total de paires dans le jeu de données de recherche, et la comparaison du premier et du deuxième ratios respectivement à un premier et un deuxième seuils donnés, le critère de performance de classification étant vérifié lorsque le premier et le deuxième seuils sont franchis.

5. Procédé de construction d'un arbre de décision selon l'une quelconque des revendications précédentes, **caractérisé en ce que**, suite à la division du nœud courant et tant qu'il reste au moins un nœud suivant non traité selon un ordre de parcours donné de l'arbre de décision, le procédé comprend l'itération du traitement pour le nœud suivant.

6. Procédé de construction d'un arbre de décision selon l'une quelconque des revendications 4 à 5, **caractérisé en ce que**, lorsque le critère de performance de classification n'a pas été vérifié, le traitement du nœud courant comprend la sélection d'une nouvelle paire d'étiquettes tant qu'il reste une paire d'étiquettes non encore sélectionnée dans le jeu de données courant.

7. Procédé de construction d'un arbre de décision selon l'une quelconque des revendications 3 à 6, **caractérisé en ce que**, lorsque le jeu de données courant comprend des paires comprenant l'étiquette représentative d'un état de fonctionnement nominal, la paire d'étiquettes sélectionnée comprend ladite étiquette comme première étiquette et une étiquette représentative d'un état de panne comme deuxième étiquette.

8. Procédé de construction d'un arbre de décision selon la revendication précédente, **caractérisé en ce que** le jeu de données de recherche comprend toutes les paires du jeu de données courant comprenant l'étiquette, parmi la première et la deuxième étiquettes, qui est la moins représentée en nombre dans le jeu de données courant, et autant de paires du jeu de données courant comprenant l'autre étiquette.

9. Procédé de construction d'un arbre de décision pour le diagnostic d'un système selon l'une quelconque des revendications 3 à 6, **caractérisé en ce que**, lorsque le jeu de données courant ne comprend pas de paires comprenant l'étiquette représentative d'un état de fonctionnement nominal, le jeu de données courant comprenant un premier nombre de paires comprenant la première étiquette et un deuxième nombre de paires comprenant la deuxième étiquette, ledit premier nombre étant supérieur au deuxième nombre, le jeu de données de recherche est formé d'un troisième nombre des paires comprenant la première étiquette, inférieur ou égal au deuxième nombre, du deuxième nombre de paires et d'un quatrième nombre de paires comprenant l'étiquette représentative d'un état de fonctionnement nominal du système égal, le quatrième nombre étant égal à une différence le deuxième et le troisième nombres.

10. Procédé de construction d'un arbre de décision selon l'une quelconque des revendications 3 à 9, **caractérisé en ce que** la recherche (234) d'une fonction de classification par classification symbolique comprend la mise en oeuvre d'un algorithme génétique comprenant :
- La génération aléatoire d'une pluralité de fonctions candidates (c) associant à plusieurs desdites variables observables une valeur de classification réelle,
- Pour chaque fonction candidate générée, l'évaluation de la fonction candidate comprenant l'application de ladite fonction candidate au jeu de données de recherche, des valeurs de classification réelle obtenues, et l'application d'une fonction de transformation auxdites valeurs de classification réelle, des valeurs transformées binaires étant obtenues et la détermination d'un score d'ajustement (S) de la fonction candidate au jeu de données de recherche à partir desdites valeurs transformées binaires ,
- La sélection d'au moins une fonction candidate parmi la pluralité de fonctions candidates générées à l'aide du score d'ajustement, ladite au moins une fonction candidate générée étant associée audit au moins un meilleur score d'ajustement selon un critère donné,
- La mutation de la au moins une fonction candidate sélectionnée et l'itération des étapes de test et de sélection aux fonctions mutées, tant qu'au moins un critère d'arrêt n'est pas satisfait.

11. Procédé de construction d'un arbre de décision selon la revendications précédente, **caractérisé en ce que** ledit au moins un critère d'arrêt comprend au moins :
la détermination d'une stagnation du score d'ajustement pendant un nombre d'itérations donné, et
un nombre maximal d'itérations des étapes d'évaluation et de sélection est atteint,

12. Procédé de diagnostic d'un système comprenant une pluralité de composants, ledit procédé comprenant :
- l'obtention (60) de valeurs mesurées par des capteurs de variables observables représentatives d'un fonctionnement dudit système, un vecteur d'entrée (V) comprenant les valeurs mesurées desdites variables observables étant formé ;
- l'application (61) audit vecteur (V)d'un arbre de décision (T) construit par le procédé selon l'une quelconque des revendications 1 à 11 à partir d'un jeu de données d'entraînement comprenant des vecteurs de variables observables de même format que le vecteur d'entrée, ladite application comprenant la propagation du vecteur d'entrée dans l'arbre de décision jusqu'à un nœud non divisé, dit nœud feuille, ledit nœud feuille étant associé à au moins une étiquette appartenant à un groupe comprenant une étiquette représentative d'un état de fonctionnement nominal du système et une pluralité d'étiquettes représentatives chacune d'un état de panne du système,
- la mise à disposition (63) d'un résultat de diagnostic (RS), comprenant la dite au moins une étiquette associée au nœud feuille de l'arbre de décision comprenant ledit vecteur.

13. Dispositif (100) de construction d'un arbre de décision pour le diagnostic d'un système comprenant une pluralité de composants (C1, C2, ..., C_{N}), ledit dispositif comprenant au moins une mémoire et un processeur configuré pour mettre en œuvre :
- l'obtention d'un jeu de données d'entraînement, le dispositif étant **caractérisé en ce que** le jeu de données d'entraînement comprend des paires, unedite paire comprenant un vecteur de valeurs mesurées de variables observables représentatives d'un fonctionnement du système et une étiquette associée (f(x1,x2,...,xM)), l'étiquette appartenant à un groupe d'étiquettes comprenant une étiquette représentative d'un état de fonctionnement nominal dudit système et des étiquettes représentatives chacune d'un état de panne d'undit composant de la pluralité,
- le traitement d'un nœud courant de l'arbre de décision associé à un sous-ensemble du jeu de données d'entraînement, dit jeu de données courant, issu du jeu de données d'entraînement, ledit traitement comprenant, lorsqu'au moins un critère de division est satisfait, la division du nœud courant en un premier et un deuxième nœuds fils par application d'une fonction de classification obtenue à partir du jeu de données courant et définie pour associer à plusieurs desdites variables observables, une première classe, dite classe nominale, représentative de l'état de fonctionnement nominal du système ou une deuxième classe, dite classe de panne, représentative desdits états de panne dudit système, et classer les paires du sous-jeu de données courant comprenant une première étiquette du groupe d'étiquettes dans la classe nominale et les paires du sous-jeu de données comprenant une deuxième étiquette du groupe d'étiquettes dans la classe de panne, et la propagation desdites paires classées dans la classe nominale dans un premier sous-jeu de données du premier nœud fils et desdites paires classées dans la classe de panne dans un deuxième sous-jeu de données du deuxième nœud fils, et
- la mise à disposition de l'arbre de décision pour le diagnostic du système.

14. Dispositif (200) de diagnostic d'un système comprenant une pluralité de composants, ledit dispositif comprenant une mémoire et un processeur configuré pour mettre en œuvre :
- l'obtention de valeurs mesurées par des capteurs de variables observables représentatives d'un fonctionnement dudit système, un vecteur d'entrée (V) comprenant les valeurs mesurées desdites variables observables étant formé ;
- l'application audit vecteur (V)d'un arbre de décision (T) construit par le dispositif selon la revendication 13 à partir d'un jeu de données d'entraînement comprenant des vecteurs de variables observables de même format que le vecteur d'entrée, ladite application comprenant la propagation du vecteur d'entrée dans l'arbre de décision jusqu'à un nœud non divisé, dit nœud feuille, ledit nœud feuille étant associé à une étiquette appartenant à un groupe comprenant une étiquette représentative d'un état de fonctionnement nominal du système et une pluralité d'étiquettes représentatives chacune d'un état de panne d'undit composant du système,
- la mise à disposition (63) d'un résultat de diagnostic (RS), comprenant ladite au moins une étiquette associée au nœud feuille de l'arbre de décision comprenant ledit vecteur.

15. Produit programme d'ordinateur comportant des instructions qui, lorsque le programme d'ordinateur est exécuté par un ordinateur, conduisent celui-ci à mettre en oeuvre les étapes d'un procédé selon l'une quelconque des revendications 1 à 12.

## Patentansprüche

1. Verfahren zum Erstellen eines Entscheidungsbaums für die Diagnose eines Systems, umfassend eine Vielzahl von Komponenten (C1, C2,..., C_{N}), das Verfahren umfassend:
- Erhalten (20) eines Trainingsdatensatzes (JDE), das Verfahren **dadurch gekennzeichnet, dass** der Trainingsdatensatz Paare umfasst, wobei ein Paar einen Vektor von Messwerten beobachtbarer Variablen, die für einen Systembetrieb repräsentativ sind, und ein zugehöriges Tag (f(x1,x2,...,xM)) umfasst, wobei das Tag zu einer Gruppe von Tags gehört, die ein Tag, das für einen nominalen Betriebszustand des Systems repräsentativ ist, und Tags, die jeweils für einen Fehlerzustand des Systems repräsentativ sind, wobei jeder Fehlerzustand mindestens einer Komponente des Systems zugeordnet ist, umfassen,
- Verarbeiten (23) eines aktuellen Knotens des Entscheidungsbaums, der einer als aktueller Datensatz bezeichneten Teilmenge des Trainingsdatensatzes, zugeordnet ist, die aus dem Trainingsdatensatz stammt, wobei die Verarbeitung, wenn mindestens ein Teilungskriterium erfüllt ist, das Teilen (236) des aktuellen Knotens in einen ersten und einen zweiten Kindknoten durch Anwenden einer Klassifizierungsfunktion umfasst, die aus dem aktuellen Datensatz erhalten wird und definiert ist, um mehreren der beobachtbaren Variablen eine als nominale Klasse bezeichnete erste Klasse, die für den nominalen Betriebszustand des Systems repräsentativ ist, oder eine als Fehlerklasse bezeichnete zweite Klasse, die für die Fehlerzustände des Systems repräsentativ ist, zuzuordnen, und die Paare des aktuellen Teildatensatzes, die ein erstes Tag der Gruppe von Tags aus der nominalen Klasse umfassen, und die Paare des Teildatensatzes, die ein zweites Tag der Gruppe von Tags aus der Fehlerklasse umfassen, einzustufen, und Propagieren der in die nominale Klasse eingestuften Paare in einen ersten Teildatensatz des ersten Kindknotens und der in die Fehlerklasse eingestuften Paare in einen zweiten Teildatensatz des zweiten Kindknotens, und
- Bereitstellen (24) des Entscheidungsbaums für die Diagnose des Systems.

2. Verfahren zum Erstellen eines Entscheidungsbaums nach dem vorstehenden Anspruch, **dadurch gekennzeichnet, dass** das Teilungskriterium ein Verunreinigungskriterium umfasst und das Verfahren die Überprüfung (231) des Verunreinigungskriteriums umfasst, umfassend das Bestimmen eines Verhältnisses zwischen einer Anzahl von Paaren des aktuellen Datensatzes, die einem gegebenen Tag der Gruppe von Tags zugeordnet sind, und einer Gesamtzahl von Paaren des aktuellen Datensatzes, wobei das Verunreinigungskriterium erfüllt ist, wenn das Verhältnis kleiner als ein gegebener Reinheitsschwellenwert ist.

3. Verfahren zum Erstellen eines Entscheidungsbaums nach dem vorstehenden Anspruch, **dadurch gekennzeichnet, dass** die Verarbeitung des aktuellen Knotens, wenn das Verunreinigungskriterium erfüllt ist, umfasst:
- Auswählen (232) des ersten und des zweiten Tags der Gruppe von Tags, die als Tag-Paar bezeichnet werden, wobei das erste und das zweite Tag verschieden sind und in den Paaren des aktuellen Datensatzes repräsentiert sind,
- Bestimmen (233) eines Suchdatensatzes (JDR) mindestens mithilfe eines Teils des aktuellen Datensatzes und in Abhängigkeit von dem ausgewählten Tag-Paar, und
- Suchen (234) der Klassifizierungsfunktion durch symbolische Klassifizierung anhand einer gegebenen Menge von Operatoren und den Paaren des Suchdatensatzes.

4. Verfahren zum Erstellen eines Entscheidungsbaums nach einem der vorstehenden Ansprüche**, dadurch gekennzeichnet, dass** das mindestens eine Teilungskriterium ein Klassifizierungsleistungskriterium der erhaltenen Klassifizierungsfunktion umfasst und dass das Verfahren vor der Teilung (236) ein Überprüfen (235) des Leistungskriteriums umfasst, umfassend das Bestimmen eines ersten Verhältnisses zwischen einer Anzahl von Paaren des aktuellen Datensatzes, die das für einen nominalen Betriebszustand repräsentative Tag umfassen und durch die Klassifizierungsfunktion in die nominale Klasse eingestuft werden, und einer Gesamtzahl von Paaren des aktuellen Datensatzes, die das Tag umfassen; Bestimmen eines zweiten Verhältnisses zwischen einer Anzahl von Paaren des Suchdatensatzes, die durch die Klassifizierungsfunktion in die Klasse aus der nominalen Klasse und der Fehlerklasse eingestuft werden, die ihrem Tag entspricht, und einer Gesamtzahl von Paaren in dem Suchdatensatz, und Vergleichen des ersten und des zweiten Verhältnisses jeweils mit einem ersten und einem zweiten gegebenen Schwellenwert, wobei das Klassifizierungsleistungskriterium erfüllt ist, wenn der erste und der zweite Schwellenwert überschritten werden.

5. Verfahren zum Erstellen eines Entscheidungsbaums nach einem der vorstehenden Ansprüche, **dadurch gekennzeichnet, dass** nach der Teilung des aktuellen Knotens und solange mindestens ein nächster unverarbeiteter Knoten gemäß einer vorgegebenen Durchlaufreihenfolge des Entscheidungsbaums verbleibt, das Verfahren das Iterieren der Verarbeitung für den nächsten Knoten umfasst.

6. Verfahren zum Erstellen eines Entscheidungsbaums nach einem der Ansprüche 4 bis 5, **dadurch gekennzeichnet, dass**, wenn das Klassifizierungsleistungskriterium nicht erfüllt wurde, die Verarbeitung des aktuellen Knotens ein Auswählen eines neuen Tag-Paares umfasst, solange ein noch nicht ausgewähltes Tag-Paar in dem aktuellen Datensatz verbleibt.

7. Verfahren zum Erstellen eines Entscheidungsbaums nach einem der Ansprüche 3 bis 6, **dadurch gekennzeichnet, dass**, wenn der aktuelle Datensatz Paare umfasst, die das für einen nominalen Betriebszustand repräsentative Tag umfassen, das ausgewählte Tag-Paar das Tag als erstes Tag und ein für einen Fehlerzustand repräsentatives Tag als zweites Tag umfasst.

8. Verfahren zum Erstellen eines Entscheidungsbaums nach dem vorstehenden Anspruch, **dadurch gekennzeichnet, dass** der Suchdatensatz alle Paare des aktuellen Datensatzes umfasst, die das Tag aus dem ersten und dem zweiten Tag umfassen, das zahlenmäßig in dem aktuellen Datensatz am wenigsten vertreten ist, und ebenso viele Paare des aktuellen Datensatzes, die das andere Tag umfassen.

9. Verfahren zum Erstellen eines Entscheidungsbaums für die Diagnose eines Systems nach einem der Ansprüche 3 bis 6,
**dadurch gekennzeichnet, dass**, wenn der aktuelle Datensatz keine Paare umfasst, die das für einen nominalen Betriebszustand repräsentative Tag umfassen, wobei der aktuelle Datensatz eine erste Anzahl von Paaren, die das erste Tag umfassen, und eine zweite Anzahl von Paaren, die das zweite Tag umfassen, umfasst, wobei die erste Anzahl größer als die zweite Anzahl ist, der Suchdatensatz aus einer dritten Anzahl der Paare, die das erste Tag umfassen, die kleiner oder gleich der zweiten Anzahl ist, der zweiten Anzahl von Paaren und einer vierten Anzahl von Paaren, die das für einen gleichen nominalen Betriebszustand des Systems repräsentative Tag umfassen, gebildet wird, wobei die vierte Anzahl gleich einer Differenz der zweiten und der dritten Anzahl ist.

10. Verfahren zum Erstellen eines Entscheidungsbaums nach einem der Ansprüche 3 bis 9, **dadurch gekennzeichnet, dass** die Suche (234) nach einer Klassifizierungsfunktion durch symbolische Klassifizierung das Implementieren eines genetischen Algorithmus umfasst, umfassend:
- zufälliges Erzeugen einer Vielzahl von Kandidatenfunktionen (c), die mehreren der beobachtbaren Variablen einen reellen Klassifizierungswert zuordnen,
- für jede erzeugte Kandidatenfunktion, Bewerten der Kandidatenfunktion, umfassend Anwenden der Kandidatenfunktion auf den Suchdatensatz, erhaltene Werte der tatsächliche Klassifizierung, und Anwenden einer Transformationsfunktion auf die Werte der tatsächlichen Klassifizierung, wobei binäre transformierte Werte erhalten werden, und Bestimmen einer Anpassungspunktzahl (S) der Kandidatenfunktion an den Suchdatensatz aus den binären transformierten Werten,
- Auswählen mindestens einer Kandidatenfunktion aus der Vielzahl von erzeugten Kandidatenfunktionen mithilfe der Anpassungspunktzahl, wobei die mindestens eine erzeugte Kandidatenfunktion der mindestens einen besten Anpassungspunktzahl gemäß einem gegebenen Kriterium zugeordnet ist,
- Mutatiieren der mindestens einen ausgewählten Kandidatenfunktion und Iterieren der Test- und Auswahlschritte für die mutierten Funktionen solange mindestens ein Abbruchkriterium nicht erfüllt ist.

11. Verfahren zum Erstellen eines Entscheidungsbaums nach dem vorstehenden Anspruch, **dadurch gekennzeichnet, dass** das mindestens eine Abbruchkriterium mindestens umfasst:
Bestimmen einer Stagnation der Anpassungspunktzahl während einer gegebenen Anzahl von Iterationen, und
eine maximale Anzahl von Iterationen der Bewertungs- und Auswahlschritte ist erreicht.

12. Verfahren für die Diagnose eines Systems, umfassend eine Vielzahl von Komponenten, das Verfahren umfassend:
- Erhalten (60) von durch Sensoren gemessenen Werten von beobachtbaren Variablen, die für einen Betrieb des Systems repräsentativ sind, wobei ein Eingangsvektor (V), der die Messwerte der beobachtbaren Variablen umfasst, gebildet wird;
- Anwenden (61) eines Entscheidungsbaums (T), der durch das Verfahren nach einem der Ansprüche 1 bis 11 aus einem Vektoren von beobachtbaren Variablen desselben Formats wie der Eingangsvektor umfassenden Trainingsdatensatz erstellt wurde, auf den Vektor (V), wobei das Anwenden das Propagieren des Eingangsvektors in dem Entscheidungsbaum bis zu einem als Blattknoten bezeichneten ungeteilten Knoten umfasst, wobei der Blattknoten mindestens einem Tag zugeordnet ist, das zu einer Gruppe gehört, die ein Tag, das für einen nominalen Betriebszustand des Systems repräsentativ ist, und eine Vielzahl von Tags, die jeweils für einen Fehlerzustand des Systems repräsentativ sind, umfasst,
- Bereitstellen (63) eines Diagnoseergebnisses (RS), umfassend das mindestens eine Tag, das dem Blattknoten des Entscheidungsbaums zugeordnet ist, der den Vektor umfasst.

13. Vorrichtung (100) zum Erstellen eines Entscheidungsbaums für die Diagnose eines Systems, umfassend eine Vielzahl von Komponenten (C1, C2, ..., C_{N}), wobei die Vorrichtung mindestens einen Speicher und einen Prozessor umfasst, der konfiguriert ist zum Implementieren von:
- Erhalten eines Trainingsdatensatzes, wobei die Vorrichtung **dadurch gekennzeichnet ist, dass** der Trainingsdatensatz Paare umfasst, wobei ein Paar einen Vektor von Messwerten beobachtbarer Variablen, die für einen Betrieb des Systems repräsentativ sind, und ein zugeordnetes Tag (f(x1,x2,...,xM)) umfasst, wobei das Tag zu einer Gruppe von Tags gehört, die ein Tag, das für einen nominalen Betriebszustand des Systems repräsentativ ist, und Tags, die jeweils für einen Fehlerzustand einer Komponente der Vielzahl repräsentativ sind, umfasst,
- Verarbeiten eines aktuellen Knotens des Entscheidungsbaums, der einer als aktueller Datensatz bezeichneten Teilmenge des Trainingsdatensatzes zugeordnet ist, die aus dem Trainingsdatensatz stammt, wobei die Verarbeitung, wenn mindestens ein Teilungskriterium erfüllt ist, das Teilen des aktuellen Knotens in einen ersten und einen zweiten Kindknoten durch Anwenden einer Klassifizierungsfunktion umfasst, die aus dem aktuellen Datensatz erhalten wird und definiert ist, um mehreren der beobachtbaren Variablen eine als nominale Klasse bezeichnete erste Klasse, die für den nominalen Betriebszustand des Systems repräsentativ ist, oder eine als Fehlerklasse bezeichnete zweite Klasse, die für die Fehlerzustände des Systems repräsentativ ist, zuzuordnen, und die Paare des aktuellen Teildatensatzes, die ein erstes Tag der Gruppe von Tags aus der nominalen Klasse umfassen, und die Paare des Teildatensatzes, die ein zweites Tag der Gruppe von Tags aus der Fehlerklasse umfassen, einzustufen, und Propagieren der in die nominale Klasse eingestuften Paare in einen ersten Teildatensatz des ersten Kindknotens und der in die Fehlerklasse eingestuften Paare in einen zweiten Teildatensatz des zweiten Kindknotens, und
- Bereitstellen des Entscheidungsbaums für die Diagnose des Systems.

14. Vorrichtung (200) für die Diagnose eines Systems, umfassend eine Vielzahl von Komponenten, wobei die Vorrichtung einen Speicher und einen Prozessor umfasst, der konfiguriert ist zum Implementieren von:
- Erhalten von durch Sensoren gemessenen Werten von beobachtbaren Variablen, die für einen Betrieb des Systems repräsentativ sind, wobei ein Eingangsvektor (V), der die Messwerte der beobachtbaren Variablen umfasst, gebildet wird;
- Anwenden eines Entscheidungsbaums (T), der durch die Vorrichtung nach Anspruch 13 aus einem Vektoren von beobachtbaren Variablen desselben Formats wie der Eingangsvektor umfassenden Trainingsdatensatz erstellt wurde, auf den Vektor (V), wobei das Anwenden das Propagieren des Eingangsvektors in dem Entscheidungsbaum bis zu einem als Blattknoten bezeichneten ungeteilten Knoten umfasst, wobei der Blattknoten einem Tag zugeordnet ist, das zu einer Gruppe gehört, die ein Tag, das für einen nominalen Betriebszustand des Systems repräsentativ ist, und eine Vielzahl von Tags, die jeweils für einen Fehlerzustand einer Komponente des Systems repräsentativ sind, umfasst,
- Bereitstellen (63) eines Diagnoseergebnisses (RS), umfassend das mindestens eine Tag, das dem Blattknoten des Entscheidungsbaums zugeordnet ist, der den Vektor umfasst.

15. Computerprogrammprodukt, umfassend Anweisungen, die, wenn das Computerprogramm von einem Computer ausgeführt wird, diesen dazu veranlassen, die Schritte eines Verfahrens nach einem der Ansprüche 1 bis 12 zu implementieren.

## Claims

1. A method for constructing a decision tree for diagnosing a system comprising a plurality of components (C1, C2, ..., C_{N}), said method comprising:
- obtaining (20) a training data set (JDE), the method being **characterized in that** the training data set comprises pairs, one said pair comprising a vector of measured values of observable variables representing an operation of the system and an associated label (f(x1, x2, ..., xM)), the label belonging to a group of labels comprising a label representing a nominal operating state of said system and labels each representing a failure state of said system, each failure state being associated with at least one component of said system,
- processing (23) a current node of the decision tree associated with a subset of the training data set, the so-called current data set, derived from the training data set, said processing comprising, when at least one splitting criterion is met, splitting (236) the current node into a first and a second child node by applying a classification function obtained from the current data set and defined to associate with a plurality of said observable variables, a first class, the so-called nominal class, representing the nominal operating state of the system or a second class, the so-called failure class, representing said failure states of said system, and classifying the pairs of the current data subset comprising a first label of the group of labels in the nominal class and the pairs of the data subset comprising a second label of the group of labels in the failure class, and propagating said pairs classified in the nominal class in a first data subset of the first child node and said pairs classified in the failure class in a second data subset of the second child node, and
- providing (24) the decision tree for system diagnosis.

2. The method for constructing a decision tree according to the preceding claim, **characterized in that** said splitting criterion comprises an impurity criterion and said method comprises checking (231) the impurity criterion, comprising determining a ratio between a number of pairs in the current data set associated with a given label in the group of labels and a total number of pairs in said current data set, the impurity criterion being checked when the ratio is below a given purity threshold.

3. The method for constructing a decision tree according to the preceding claim, **characterized in that** processing the current node comprises, when the impurity criterion is met:
- selecting (232) the first and second labels in the group of labels, the so-called label pair, the first and second labels being distinct and represented in the pairs of the current data set,
- determining (233) a search data set (JDR) using at least some of the current data set and based on the selected label pair, and
- searching (234) for the classification function using symbolic classification based on a given set of operators and the pairs in the search data set.

4. The method for constructing a decision tree according to one of the preceding claims, **characterized in that** said at least one splitting criterion comprises a classification performance criterion of the classification function obtained, **and in that** the method comprises, prior to splitting (236), verifying (235) said performance criterion, comprising determining a first ratio between a number of pairs in the current data set comprising the label representing a nominal operating state classified by the classification function in the nominal class out of a total number of pairs in the current data set comprising said label, determining a second ratio between a number of pairs in the search data set classified by the classification function in the class from the nominal class and the failure class which corresponds to their label and a total number of pairs in the search data set, and comparing the first and second ratios respectively with a first and a second given threshold, the classification performance criterion being verified when the first and second thresholds are crossed.

5. The method for constructing a decision tree according to any one of the preceding claims, **characterized in that**, after splitting the current node and as long as at least one next node remains unprocessed according to a given sequence of the decision tree, the method comprises iterating the processing for the next node.

6. The method for constructing a decision tree according to any one of claims 4 to 5, **characterized in that**, when the classification performance criterion has not been verified, processing the current node comprises selecting a new pair of labels as long as there remains one pair of labels not yet selected in the current data set.

7. The method for constructing a decision tree according to any one of claims 3 to 6, **characterized in that**, when the current data set comprises pairs comprising the label representing a nominal operating state, the selected label pair comprises said label as a first label and a label representing a failure state as a second label.

8. The method for constructing a decision tree according to the preceding claim, **characterized in that** the search data set comprises all the pairs in the current data set comprising the label, from the first and second labels, which is the least represented in number in the current data set, and as many pairs of the current data set comprising the other label.

9. The method for constructing a decision tree for diagnosing a system according to any one of claims 3 to 6, **characterized in that**, when the current data set does not comprise any pairs comprising the label representing a nominal operating state, the current data set comprising a first number of pairs comprising the first label and a second number of pairs comprising the second label, said first number being greater than the second number, the search data set is formed of a third number of pairs comprising the first label, less than or equal to the second number, the second number of pairs and a fourth number of pairs comprising the label representing a nominal operating state of the system, the fourth number being equal to a difference between the second and third numbers.

10. The method for constructing a decision tree according to any one of claims 3 to 9, **characterized in that** searching (234) for a classification function by symbolic classification comprises implementing a genetic algorithm comprising:
- randomly generating a plurality of candidate functions (c) associating an actual classification value with a plurality of said observable variables,
- for each generated candidate function, evaluating the candidate function comprising applying said candidate function to the search data set, for the actual classification values obtained, and applying a transformation function to said actual classification values, with binary transformed values being obtained and determining a fitness score (S) for the candidate function of the search data set from said binary transformed values,
- selecting at least one candidate function from the plurality of generated candidate functions using the fitness score, said at least one generated candidate function being associated with said at least one best fitness score according to a given criterion,
- mutating the at least one selected candidate function and iterating the test and selection steps on the mutated functions, until at least one stopping criterion is not met.

11. The method for constructing a decision tree according to the preceding claim, **characterized in that** said at least one stopping criterion comprises at least:
determining a stagnation of the fitness score during a given number of iterations, and
a maximum number of iterations of the evaluation and selection steps is reached,

12. A method for diagnosing a system comprising a plurality of components, said method comprising:
- obtaining (60) values measured by sensors of observable variables representing an operation of said system, an input vector (V) comprising the measured values of said observable variables being formed;
- applying (61) to said vector (V) a decision tree (T) constructed by the method according to any one of claims 1 to 11 from a set of training data comprising vectors of observable variables in the same format as the input vector, said application comprising propagating the input vector in the decision tree up to an unsplit node, a so-called leaf node, said leaf node being associated with at least one label belonging to a group comprising a label representing a nominal operating state of the system and a plurality of labels each representing a failure state of the system,
- providing (63) a diagnosis result (RS), comprising said at least one label associated with the leaf node of the decision tree comprising said vector.

13. A device (100) for constructing a decision tree for diagnosing a system comprising a plurality of components (C1, C2, ..., C_{N}), said device comprising at least one memory and one processor configured to implement:
- obtaining a training data set, the device being **characterized in that** the training data set comprises pairs, one said pair comprising a vector of measured values of observable variables representing an operation of the system and an associated label (f(x1, x2, ..., xM)), the label belonging to a group of labels comprising a label representing a nominal operating state of said system and labels each representing a failure state of one said component of the plurality,
- processing a current node of the decision tree associated with a subset of the training data set, the so-called current data set, derived from the training data set, said processing comprising, when at least one splitting criterion is met, splitting the current node into a first and a second child node by applying a classification function obtained from the current data set and defined to associate with a plurality of said observable variables, a first class, the so-called nominal class, representing the nominal operating state of the system or a second class, the so-called failure class, representing said failure states of said system, and classifying the pairs of the current data subset comprising a first label of the group of labels in the nominal class and the pairs of the data subset comprising a second label of the group of labels in the failure class, and propagating said pairs classified in the nominal class in a first data subset of the first child node and said pairs classified in the failure class in a second data subset of the second child node, and
- providing the decision tree for system diagnosis.

14. A device (200) for diagnosing a system comprising a plurality of components, said device comprising a memory and a processor configured to implement:
- obtaining values measured by sensors of observable variables representing an operation of said system, an input vector (V) comprising the measured values of said observable variables being formed;
- applying to said vector (V) a decision tree (T) constructed by the device according to claim 13, from a set of training data comprising vectors of observable variables in the same format as the input vector, said application comprising propagating the input vector in the decision tree up to an unsplit node, the so-called leaf node, said leaf node being associated with a label belonging to a group comprising a label representing a nominal operating state of the system and a plurality of labels each representing a failure state of one said component of the system,
- providing (63) a diagnosis result (RS), comprising said at least one label associated with the leaf node of the decision tree comprising said vector.

15. A computer program product comprising instructions which, when the computer program is executed by a computer, cause said computer to implement the steps of a method according to any one of claims 1 to 12.
